# EUROPEAN PATENT APPLICATION

(11) **EP 4 187 833 A1**
(43) Date of publication of application: **31.05.2023**
(21) Application number: 22806673.4
(22) Date of filing: 09.05.2022
(51) Int. Cl.: H04L 5/00

(54) **METHOD USED IN NODE FOR WIRELESS COMMUNICATION, AND APPARATUS**

(30) Priority: 11.05.2021 CN 202110511243
(71) Applicant: SHANGHAI LANGBO COMMUNICATION TECHNOLOGY COMPANY LIMITED, Shanghai 200240 (CN)
(72) Inventor: HU, Yang, Shanghai 201206 (CN); ZHANG, Xiaobo, Shanghai 201206 (CN)
(74) Representative: Zhang, Fan
(86) International application number: PCT/CN2022/091599
(87) International publication number: WO 2022/237707

(57) **Abstract**

Disclosed in the present application is a method used in a node for wireless communication and an apparatus. A first receiver receives a first information block (101), the first information block being used for determining a first time-frequency resource pool; and a first transmitter utilizes a first transmission power to transmit a first signal (102), the first signal carrying a first bit block and a second bit block; wherein a time-frequency resource used by the first signal belongs to the first time-frequency resource pool; the number of bits in the first bit block and a first amount of resources are used together for determining a first adjustment quantity, the first amount of resources being the amount of resource elements used for the first bit block in the first time-frequency resource pool; the first adjustment quantity is used for determining a target adjustment quantity, and the target adjustment quantity is used for determining the first transmission power.

## Description

### TECHNICAL FIELD

The present application relates to transmission methods and devices in wireless communication systems, and in particular to a method and device for radio signal transmission in a wireless communication system supporting cellular networks.

### BACKGROUND

In a 3rd Generation Partner Project (3GPP) New Radio (NR) system, to provide better support for more demanding Ultra Reliable and Low Latency Communication (URLLC) services, for instance, with higher reliability or lower latency, the specifications of the NR Release 16 have already supported enhancement in many aspects of uplink transmission.

A Work Item (WI) of further enhancement of URLLC in NR Release 17 was approved by the 3GPP RAN Plenary. The WI is proceeded with a focus of study on the Multiplexing of different intra-User-Equipment (Intra-UE) services.

### SUMMARY

Under such backdrop, how to determine a transmission power of a Physical Uplink Control CHannel (PUCCH) bearing different priorities of Uplink Control Information (UCI) is a key issue required to be addressed.

To address the above problem, the present application provides a solution. The statement above only took Uplink (UL) for example; but the present application also applies to Downlink (DL) and Sidelink (SL) transmission scenarios, where similar technical effect can be achieved. Additionally, the adoption of a unified solution for various scenarios, including but not limited to UL, DL and SL, contributes to the reduction of hardcore complexity and costs. It should be noted that if no conflict is incurred, embodiments in a User Equipment (UE) in the present application and the characteristics of the embodiments are also applicable to a base station, and vice versa. What's more, the embodiments in the present application and the characteristics in the embodiments can be arbitrarily combined if there is no conflict.

In one embodiment, interpretations of the terminology in the present application refer to definitions given in the 3GPP TS36 series.

In one embodiment, interpretations of the terminology in the present application refer to definitions given in the 3GPP TS38 series.

In one embodiment, interpretations of the terminology in the present application refer to definitions given in the 3GPP TS37 series.

In one embodiment, interpretations of the terminology in the present application refer to definitions given in Institute of Electrical and Electronics Engineers (IEEE) protocol specifications.

The present application provides a method in a first node for wireless communications, comprising:
receiving a first information block, the first information block being used to determine a first time-frequency resource pool; and
transmitting a first signal with a first transmission power, the first signal carrying a first bit block and a second bit block, the first bit block comprising at least one control information bit, and the second bit block comprising at least one control information bit, where a priority of the control information bit(s) comprised in the first bit block and a priority of the control information bit(s) comprised in the second bit block are different;
herein, time-frequency resources occupied by the first signal belong to the first time-frequency resource pool; resource element(s) (RE(s)) comprised in the first time-frequency resource pool being used for the first bit block and RE(s) comprised in the first time-frequency resource pool being used for the second bit block are orthogonal; a number of bit(s) comprised in the first bit block and a first resource size are used together to determine a first amount of adjustment, the first resource size being a number of the RE(s) comprised in the first time-frequency resource pool being used for the first bit block; the first amount of adjustment is used to determine a target amount of adjustment, the target amount of adjustment being used to determine the first transmission power.

In one embodiment, a problem to be solved in the present application includes: how to determine a transmission power of a physical channel carrying UCIs of different priorities.

In one embodiment, a problem to be solved in the present application includes: how to determine a transmission power of a PUCCH when the PUCCH is used for bearing multiple UCIs of different priorities (for instance, two UCIs respectively corresponding to Priority index 0 and Priority index 1).

In one embodiment, a problem to be solved in the present application includes: how to determine a transmission power of a PUCCH by determining the target amount of adjustment; the PUCCH is used for bearing the first signal carrying multiple UCIs of different priorities (for instance, two UCIs respectively corresponding to Priority index 0 and Priority index 1) and the PUCCH uses one of a PUCCH format 2, a PUCCH format 3 or a PUCCH format 4, where channel codings are respectively performed on the multiple UCIs of different priorities carried by the first signal.

In one embodiment, a problem to be solved in the present application includes: how to determine a transmission power of a PUCCH used for transmitting the multiple UCIs with different priorities in the case that channel codings with different coding rates are respectively used by these UCIs.

In one embodiment, characteristics of the above method include: multiple UCIs of different priorities transmitted in a same PUCCH respectively use channel codings with different coding rates.

In one embodiment, an advantage of the above method includes: the power control for a PUCCH for transmitting multiple UCIs of different priorities that use channel codings with different coding rates are more likely to be achieved.

In one embodiment, an advantage of the above method includes: ensuring the transmission performance of high-priority (e.g., URLLC) UCI.

In one embodiment, an advantage of the above method includes: being easily compatible.

According to one aspect of the present application, the above method is characterized in that,
a first amount of calculation is equal to a sum of the number of the bit(s) comprised in the first bit block and a number of Cyclic Redundancy Check (CRC) bit(s) for the first bit block being divided by the first resource size; the first amount of calculation is used to determine the first amount of adjustment.

According to one aspect of the present application, the above method is characterized in that,
when the number of the bit(s) comprised in the first bit block is no greater than a first threshold, a first information bit number and the first resource size are used together to determine the first amount of adjustment, the first information bit number being a number of Hybrid Automatic Repeat reQuest-ACKnowledgement (HARQ-ACK) information bit(s) used for obtaining a transmission power of a Physical Uplink Control CHannel (PUCCH); when the number of the bit(s) comprised in the first bit block is greater than a first threshold, a first amount of calculation is equal to a sum of the number of the bit(s) comprised in the first bit block and a number of CRC bit(s) for the first bit block being divided by the first resource size, the first amount of calculation being used to determine the first amount of adjustment; the first threshold is pre-defined or configurable.

According to one aspect of the present application, the above method is characterized in that,
the first amount of adjustment is equal to 10×log10 (2^b-1), where the b is equal to K2 multiplied by the first amount of calculation, where the K2 is pre-defined or configurable.

According to one aspect of the present application, the above method is characterized in that,
at least a latter of the first bit block and the second bit block is used to determine a second amount of adjustment, the target amount of adjustment being equal to a maximum one of the first amount of adjustment and the second amount of adjustment.

In one embodiment, an advantage of the above method includes: avoiding inadequacy of the transmission power for high-priority UCI due to multiplexing with low-priority UCI onto a same PUCCH.

In one embodiment, an advantage of the above method includes: ensuring avoidance of excessive power ramping caused by multiplexing of low-priority UCI.

In one embodiment, an advantage of the above method includes: enhancing the transmission performance of low-priority UCI.

In one embodiment, an advantage of the above method includes: optimizing the overall transmission performance of a PUCCH on the premise of ensuring sufficient transmission power for high-priority UCI.

According to one aspect of the present application, the above method is characterized in that,
the target amount of adjustment is the first amount of adjustment.

In one embodiment, characteristics of the above method include: performing regulation only for the former of high-priority UCI and low-priority UCI in the power control of a PUCCH.

In one embodiment, an advantage of the above method includes: avoiding excessive power ramping caused by multiplexing low-priority UCI on the condition that sufficient transmission power for high-priority UCI can be ensured.

According to one aspect of the present application, the above method is characterized in that,
the first transmission power is equal to a smaller value between an upper-limit transmission power and a target transmission power, the target amount of adjustment being used to determine the target transmission power, and the upper-limit transmission power being pre-defined or configurable.

The present application provides a method in a second node for wireless communications, comprising:
transmitting a first information block, the first information block being used to determine a first time-frequency resource pool; and
receiving a first signal transmitted with a first transmission power, the first signal carrying a first bit block and a second bit block, the first bit block comprising at least one control information bit, and the second bit block comprising at least one control information bit, where a priority of the control information bit(s) comprised in the first bit block and a priority of the control information bit(s) comprised in the second bit block are different;
herein, time-frequency resources occupied by the first signal belong to the first time-frequency resource pool; resource element(s) (RE(s)) comprised in the first time-frequency resource pool being used for the first bit block and RE(s) comprised in the first time-frequency resource pool being used for the second bit block are orthogonal; a number of bit(s) comprised in the first bit block and a first resource size are used together to determine a first amount of adjustment, the first resource size being a number of the RE(s) comprised in the first time-frequency resource pool being used for the first bit block; the first amount of adjustment is used to determine a target amount of adjustment, the target amount of adjustment being used to determine the first transmission power.

According to one aspect of the present application, the above method is characterized in that,
a first amount of calculation is equal to a sum of the number of the bit(s) comprised in the first bit block and a number of Cyclic Redundancy Check (CRC) bit(s) for the first bit block being divided by the first resource size; the first amount of calculation is used to determine the first amount of adjustment.

According to one aspect of the present application, the above method is characterized in that,
when the number of the bit(s) comprised in the first bit block is no greater than a first threshold, a first information bit number and the first resource size are used together to determine the first amount of adjustment, the first information bit number being a number of Hybrid Automatic Repeat reQuest-ACKnowledgement (HARQ-ACK) information bit(s) used for obtaining a transmission power of a Physical Uplink Control CHannel (PUCCH); when the number of the bit(s) comprised in the first bit block is greater than a first threshold, a first amount of calculation is equal to a sum of the number of the bit(s) comprised in the first bit block and a number of CRC bit(s) for the first bit block being divided by the first resource size, the first amount of calculation being used to determine the first amount of adjustment; the first threshold is pre-defined or configurable.

According to one aspect of the present application, the above method is characterized in that,
the first amount of adjustment is equal to 10×log10 (2^b-1), where the b is equal to K2 multiplied by the first amount of calculation, where the K2 is pre-defined or configurable.

According to one aspect of the present application, the above method is characterized in that,
at least a latter of the first bit block and the second bit block is used to determine a second amount of adjustment, the target amount of adjustment being equal to a maximum one of the first amount of adjustment and the second amount of adjustment.

According to one aspect of the present application, the above method is characterized in that,
the target amount of adjustment is the first amount of adjustment.

According to one aspect of the present application, the above method is characterized in that,
the first transmission power is equal to a smaller value between an upper-limit transmission power and a target transmission power, the target amount of adjustment being used to determine the target transmission power, and the upper-limit transmission power being pre-defined or configurable.

The present application provides a first node for wireless communications, comprising:
a first receiver, which receives a first information block, the first information block being used to determine a first time-frequency resource pool; and
a first transmitter, which transmits a first signal with a first transmission power, the first signal carrying a first bit block and a second bit block, the first bit block comprising at least one control information bit, and the second bit block comprising at least one control information bit, where a priority of the control information bit(s) comprised in the first bit block and a priority of the control information bit(s) comprised in the second bit block are different;
herein, time-frequency resources occupied by the first signal belong to the first time-frequency resource pool; resource element(s) (RE(s)) comprised in the first time-frequency resource pool being used for the first bit block and RE(s) comprised in the first time-frequency resource pool being used for the second bit block are orthogonal; a number of bit(s) comprised in the first bit block and a first resource size are used together to determine a first amount of adjustment, the first resource size being a number of the RE(s) comprised in the first time-frequency resource pool being used for the first bit block; the first amount of adjustment is used to determine a target amount of adjustment, the target amount of adjustment being used to determine the first transmission power.

The present application provides a second node for wireless communications, comprising:
a second transmitter, which transmits a first information block, the first information block being used to determine a first time-frequency resource pool; and
a second receiver, which receives a first signal transmitted with a first transmission power, the first signal carrying a first bit block and a second bit block, the first bit block comprising at least one control information bit, and the second bit block comprising at least one control information bit, where a priority of the control information bit(s) comprised in the first bit block and a priority of the control information bit(s) comprised in the second bit block are different;
herein, time-frequency resources occupied by the first signal belong to the first time-frequency resource pool; resource element(s) (RE(s)) comprised in the first time-frequency resource pool being used for the first bit block and RE(s) comprised in the first time-frequency resource pool being used for the second bit block are orthogonal; a number of bit(s) comprised in the first bit block and a first resource size are used together to determine a first amount of adjustment, the first resource size being a number of the RE(s) comprised in the first time-frequency resource pool being used for the first bit block; the first amount of adjustment is used to determine a target amount of adjustment, the target amount of adjustment being used to determine the first transmission power.

In one embodiment, the method in the present application has the following advantages:
ensuring the power control for a PUCCH for transmitting multiple UCIs of different priorities that use channel codings with different coding rates;
ensuring the transmission performance of high-priority (e.g., URLLC) UCI;
being easily compatible;
avoiding inadequacy of the transmission power for high-priority UCI due to multiplexing with low-priority UCI onto a same PUCCH;
ensuring avoidance of excessive power ramping caused by multiplexing of low-priority UCI;
enhancing the transmission performance of low-priority UCI;
optimizing the overall transmission performance of a PUCCH on the premise of ensuring sufficient transmission power for high-priority UCI;
benefiting the control of interference.

### BRIEF DESCRIPTION OF THE DRAWINGS

Other features, objects and advantages of the present application will become more apparent from the detailed description of non-restrictive embodiments taken in conjunction with the following drawings:
FIG. 1 illustrates a flowchart of processing of a first node according to one embodiment of the present application.
FIG. 2 illustrates a schematic diagram of a network architecture according to one embodiment of the present application.
FIG. 3 illustrates a schematic diagram of a radio protocol architecture of a user plane and a control plane according to one embodiment of the present application.
FIG. 4 illustrates a schematic diagram of a first communication device and a second communication device according to one embodiment of the present application.
FIG. 5 illustrates a flowchart of signal transmission according to one embodiment of the present application.
FIG. 6 illustrates a schematic diagram of relations among a number of bit(s) comprised in a first bit block, a first resource size, a first amount of calculation and a first amount of adjustment according to one embodiment of the present application.
FIG. 7 illustrates a schematic diagram explaining that a number of bit(s) comprised in a first bit block and a first resource size are used to determine a first amount of adjustment according to one embodiment of the present application.
FIG. 8 illustrates a schematic diagram explaining that a first amount of calculation is used to determine a first amount of adjustment according to one embodiment of the present application.
FIG. 9 illustrates a schematic diagram of relations among a first bit block, a second bit block, a third amount of calculation, a second amount of adjustment, a first amount of adjustment and a target amount of adjustment according to one embodiment of the present application.
FIG. 10 illustrates a schematic diagram explaining that a target transmission power is used to determine a first transmission power and a target amount of adjustment is used to determine a target transmission power according to one embodiment of the present application.
FIG. 11 illustrates a schematic diagram illustrating a first time-frequency resource pool according to one embodiment of the present application.
FIG. 12 illustrates a schematic diagram of the relation between a first node/first receiver and a first signaling according to one embodiment of the present application.
FIG. 13 illustrates a schematic diagram of the relation between a priority of control information bit(s) comprised in a first bit block and a priority of control information bit(s) comprised in a second bit block according to one embodiment of the present application.
FIG. 14 illustrates a structure block diagram of a processing device in a first node according to one embodiment of the present application.
FIG. 15 illustrates a structure block diagram a processing device in a second node according to one embodiment of the present application.

### DESCRIPTION OF THE EMBODIMENTS

The technical scheme of the present application is described below in further details in conjunction with the drawings. It should be noted that the embodiments of the present application and the characteristics of the embodiments may be arbitrarily combined if no conflict is caused.

### Embodiment 1

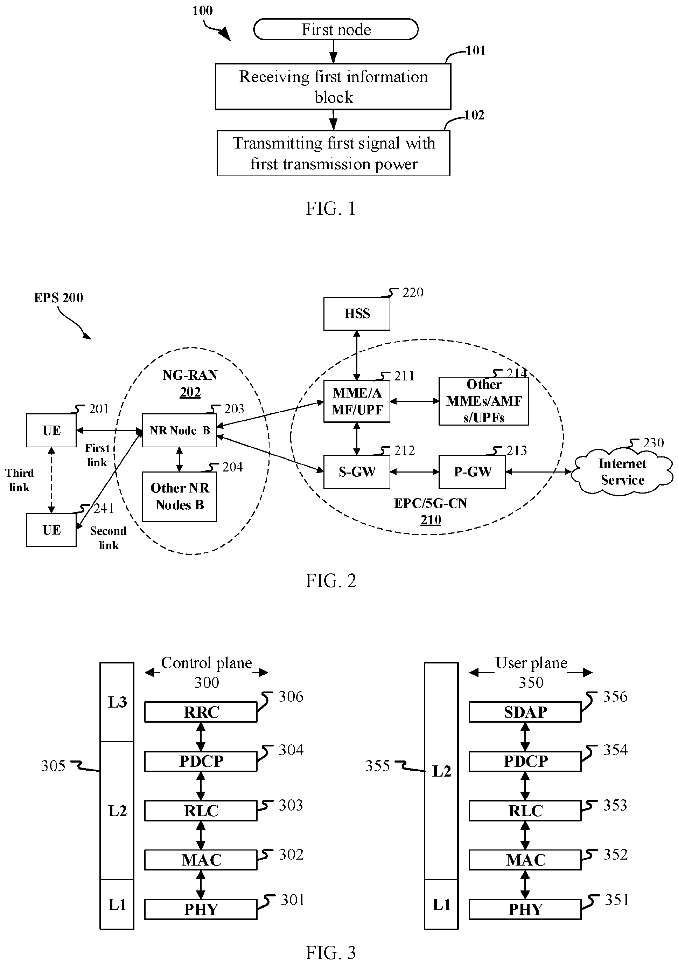

Embodiment 1 illustrates a flowchart of processing of a first node, as shown in FIG. 1.

In Embodiment 1, the first node in the present application receives a first information block in step 101; and transmits a first signal with a first transmission power in step 102.

In Embodiment 1, the first information block is used to determine a first time-frequency resource pool; the first signal carries a first bit block and a second bit block, the first bit block comprising at least one control information bit, and the second bit block comprising at least one control information bit, where a priority of the control information bit(s) comprised in the first bit block and a priority of the control information bit(s) comprised in the second bit block are different; time-frequency resources occupied by the first signal belong to the first time-frequency resource pool; resource element(s) (RE(s)) comprised in the first time-frequency resource pool being used for the first bit block and RE(s) comprised in the first time-frequency resource pool being used for the second bit block are orthogonal; a number of bit(s) comprised in the first bit block and a first resource size are used together to determine a first amount of adjustment, the first resource size being a number of the RE(s) comprised in the first time-frequency resource pool being used for the first bit block; the first amount of adjustment is used to determine a target amount of adjustment, the target amount of adjustment being used to determine the first transmission power.

In one embodiment, the first signal in the present application comprises a radio signal.

In one embodiment, the first signal in the present application comprises a radio frequency signal.

In one embodiment, the first signal in the present application comprises a baseband signal.

In one embodiment, the phrase that the first signal carries a first bit block and a second bit block has a meaning that: the first signal comprises an output by all or partial bits in the first bit block (or a bit block generated by the first bit block) sequentially through all or part of CRC Attachment, Segmentation, Code-block-level (CB-level) CRC Attachment, Channel Coding, Rate Matching, Concatenation, Scrambling, Modulation, Layer Mapping, Precoding, Mapping to Resource Element, and Multi-carrier symbol Generation, as well as Modulation and Upconversion; besides, the first signal also comprises an output by all or partial bits in the second bit block (or a bit block generated by the second bit block) sequentially through all or part of CRC Attachment, Segmentation, CB-level CRC Attachment, Channel Coding, Rate Matching, Concatenation, Scrambling, Modulation, Layer Mapping, Precoding, Mapping to Resource Element, and Multi-carrier symbol Generation, as well as Modulation and Upconversion.

In one embodiment, the phrase that the first signal carries a first bit block and a second bit block has a meaning that: the first signal is a signal bearing the first bit block (or a bit block generated by the first bit block) and the second bit block (or a bit block generated by the second bit block).

In one embodiment, the first time-frequency resource pool in the present application comprises at least one Resource Element (RE) in time-frequency domain.

In one embodiment, a said RE occupies a multicarrier symbol in time domain, and a subcarrier in frequency domain.

In one embodiment, the multicarrier symbol in the present application is an Orthogonal Frequency Division Multiplexing (OFDM) Symbol.

In one embodiment, the multicarrier symbol in the present application is a Single Carrier- Frequency Division Multiple Access (SC-FDMA) symbol.

In one embodiment, the multicarrier symbol in the present application is a Discrete Fourier Transform Spread OFDM (DFT-S-OFDM) symbol.

In one embodiment, the multicarrier symbol in the present application is a Filter Bank Multi Carrier (FBMC) symbol.

In one embodiment, the multicarrier symbol in the present application comprises a Cyclic Prefix (CP).

In one embodiment, the first time-frequency resource pool in the present application comprises a positive integer number of subcarrier(s) in frequency domain.

In one embodiment, the first time-frequency resource pool in the present application comprises a positive integer number of Physical Resource Block(s) (PRB(s)) in frequency domain.

In one embodiment, the first time-frequency resource pool in the present application comprises a positive integer number of Resource Block(s) (RB(s)) in frequency domain.

In one embodiment, the first time-frequency resource pool in the present application comprises a positive integer number of multicarrier symbol(s) in time domain.

In one embodiment, the first time-frequency resource pool in the present application comprises a positive integer number of slot(s) in time domain.

In one embodiment, the first time-frequency resource pool in the present application comprises a positive integer number of sub-slot(s) in time domain.

In one embodiment, the first time-frequency resource pool in the present application comprises a positive integer number of millisecond(s) (ms) in time domain.

In one embodiment, the first time-frequency resource pool in the present application comprises a positive integer number of consecutive multicarrier symbols in time domain.

In one embodiment, the first time-frequency resource pool in the present application comprises a positive integer number of non-consecutive slots in time domain.

In one embodiment, the first time-frequency resource pool in the present application comprises a positive integer number of consecutive slots in time domain.

In one embodiment, the first time-frequency resource pool in the present application comprises a positive integer number of sub-frame(s) in time domain.

In one embodiment, the first time-frequency resource pool in the present application is indicated by a physical-layer signaling or configured by a higher-layer signaling.

In one embodiment, the first time-frequency resource pool in the present application is indicated by DCI or configured by a Radio Resource Control (RRC) signaling or configured by a Medium Access Control layer Control Element (MAC CE) signaling.

In one embodiment, the first time-frequency resource pool in the present application comprises time-frequency resources occupied by an uplink physical channel.

In one embodiment, a said uplink physical channel in the present application is a Physical Uplink Control CHannel (PUCCH) or a Physical Uplink Shared CHannel (PUSCH).

In one embodiment, the first time-frequency resource pool in the present application is all or part of time-frequency resources occupied by a PUCCH resource.

In one embodiment, the first time-frequency resource pool comprises time-frequency resources reserved for a physical channel, the physical channel being used for transmitting the first signal.

In one embodiment, the first time-frequency resource pool comprises time-frequency resources reserved for a physical control channel, the physical control channel being used for transmitting the first signal.

In one embodiment, the first time-frequency resource pool comprises time-frequency resources reserved for a physical shared channel, the physical shared channel being used for transmitting the first signal.

In one embodiment, the first information block comprises an RRC signaling.

In one embodiment, the first information block comprises one Information Element (IE).

In one embodiment, the first information block is an IE.

In one embodiment, the first information block comprises one or more fields in an IE.

In one embodiment, the first information block comprises a MAC CE signaling.

In one embodiment, the first information block comprises one or more fields in a DCI.

In one embodiment, the first information block comprises a higher-layer signaling.

In one embodiment, the first information block is a PUCCH-config.

In one embodiment, the first information block is a PUCCH-configurationList.

In one embodiment, the first information block is a BWP-dedicated.

In one embodiment, the first information block is an sps-PUCCH-AN.

In one embodiment, the first information block is an sps-PUCCH-AN-ResourceID.

In one embodiment, a name of the first information block includes PUCCH.

In one embodiment, a name of the first information block includes PUCCH-config.

In one embodiment, the first information block indicates the first time-frequency resource pool.

In one embodiment, the first information block explicitly indicates the first time-frequency resource pool.

In one embodiment, the first information block implicitly indicates the first time-frequency resource pool.

In one embodiment, the first time-frequency resource pool is all or part of time-frequency resources occupied by a physical channel indicated/configured by the first information block.

In one embodiment, the first time-frequency resource pool is all or part of resources occupied by a PUCCH resource configured by the first information block in time-frequency domain.

In one embodiment, the first time-frequency resource pool is resources occupied by one of multiple PUCCH resources configured by the first information block in time-frequency domain.

In one embodiment, the first time-frequency resource pool is resources occupied by a PUCCH resource indicated by the first information block in time-frequency domain.

In one embodiment, the first time-frequency resource pool is resources occupied by a Physical Sidelink Control CHannel (PSCCH) indicated by the first information block in time-frequency domain.

In one embodiment, the first signal is a signal transmitted on a PUCCH.

In one embodiment, the first signal is a PUCCH.

In one embodiment, the first signal comprises a signal within one or more frequency-hopping ranges among multiple frequency-hopping ranges of a PUCCH transmission.

In one embodiment, the first bit block comprises at least one UCI bit.

In one embodiment, the second bit block comprises at least one UCI bit.

In one embodiment, the first bit block comprises at least one Hybrid Automatic Repeat reQuest ACKnowledgement (HARQ-ACK) information bit.

In one embodiment, the second bit block comprises at least one HARQ-ACK information bit.

In one embodiment, the first bit block only comprises HARQ-ACK information bit(s).

In one embodiment, the second bit block only comprises HARQ-ACK information bit(s).

In one embodiment, the first bit block also comprises at least one control information bit other than HARQ-ACK bit(s).

In one embodiment, the second bit block also comprises at least one control information bit other than HARQ-ACK bit(s).

In one embodiment, the first bit block does not comprise a Cyclic Redundancy Check (CRC) bit.

In one embodiment, the first bit block comprises at least one CRC bit.

In one embodiment, the second bit block comprises no CRC bit.

In one embodiment, the second bit block comprises at least one CRC bit.

In one embodiment, a said control information bit in the present application is a UCI bit.

In one embodiment, a said control information bit in the present application is a HARQ_ACK information bit.

In one embodiment, a said control information bit in the present application is a HARQ_ACK information bit or a Scheduling Request (SR) bit.

In one embodiment, a said control information bit in the present application is a HARQ_ACK information bit or an SR bit or a Channel State Information (CSI) bit.

In one embodiment, a said control information bit in the present application is a bit of control information carrying a Higher Layer signaling.

In one embodiment, a said control information bit in the present application is a Sidelink Control Information (SCI) bit.

In one embodiment, a said control information bit in the present application is: a HARQ_ACK information bit, or an SR information bit or a CSI information bit, or a bit obtained by at least one of these three kinds of information bits through at least one of Logic AND, Logic OR, Logic NOT, or Xor operations.

In one embodiment, a number of bit(s) comprised in the first bit block and the first resource size are used together to determine the first amount of adjustment.

In one embodiment, a number of bit(s) comprised in the first bit block indicates a set of amounts of adjustment, where the first resource size indicates the first amount of adjustment from the set of amounts of adjustment.

In one embodiment, the first resource size indicates a set of amounts of adjustment, where a number of bit(s) comprised in the first bit block indicates the first amount of adjustment from the set of amounts of adjustment.

In one embodiment, the resource elements comprised in the first time-frequency resource pool being used for the first bit block include: Resource Elements (REs) in the first time-frequency resource pool used for mapping to coded bits generated by the first bit block.

In one embodiment, the resource elements comprised in the first time-frequency resource pool being used for the first bit block refer to: REs in the first time-frequency resource pool used for mapping to coded bits generated by the first bit block.

In one embodiment, the coded bits generated by the first bit block refer to: an output by the first bit block or a bit block generated by the first bit block sequentially through part of all of CRC Attachment, Segmentation, CB-level CRC Attachment, Channel Coding, Rate Matching and Concatenation.

In one embodiment, the resource elements comprised in the first time-frequency resource pool being used for the second bit block include: REs in the first time-frequency resource pool used for mapping to coded bits generated by the second bit block.

In one embodiment, the resource elements comprised in the first time-frequency resource pool being used for the second bit block refer to: REs in the first time-frequency resource pool used for mapping to coded bits generated by the second bit block.

In one embodiment, the coded bits generated by the second bit block refer to: an output by the second bit block or a bit block generated by the second bit block sequentially through part of all of CRC Attachment, Segmentation, CB-level CRC Attachment, Channel Coding, Rate Matching and Concatenation.

In one embodiment, the word "orthogonal" in the present application means: being non-overlapping in time-frequency domain.

In one embodiment, the word "orthogonal" in the present application means: being non-overlapping.

In one embodiment, a bit block generated by the first (or the second) bit block refers to: an output by at least partial bits in the first (or the second) bit block through at least one of Logic AND, Logic OR, Logic NOT, Xor, Repetition, Deleting bits or zero-padding operations.

In one embodiment, a bit block generated by the first (or the second) bit block includes: an output by at least partial bits in the first (or the second) bit block through at least one of Logic AND, Logic OR, Logic NOT, Xor, Repetition, Deleting bits or zero-padding operations.

In one embodiment, the first bit block and the second bit block are respectively performed with channel codings.

In one embodiment, the first bit block and the second bit block respectively use channel codings with different coding rates for generating coded bits.

In one embodiment, the number of bit(s) comprised in the first bit block is no greater than 2.

In one embodiment, the number of bits comprised in the first bit block is greater than 2.

In one embodiment, the number of bits comprised in the first bit block is greater than 2 and no greater than 11.

In one embodiment, the number of bits comprised in the first bit block is greater than 11.

In one embodiment, the number of bit(s) comprised in the first bit block is no greater than a second threshold.

In one embodiment, the number of bits comprised in the first bit block is greater than a second threshold.

In one embodiment, the second threshold in the present application is pre-defined.

In one embodiment, the second threshold in the present application is configurable.

In one embodiment, the second threshold in the present application is a positive integer.

In one embodiment, the second threshold in the present application is no greater than 1706.

In one embodiment, the second threshold in the present application is equal to 11.

In one embodiment, the second threshold in the present application is equal to 22.

In one embodiment, the second threshold in the present application is equal to 4.

In one embodiment, the number of bit(s) comprised in the second bit block is no greater than 2.

In one embodiment, the number of bits comprised in the second bit block is greater than 2.

In one embodiment, the number of bits comprised in the second bit block is greater than 2 and no greater than 11.

In one embodiment, the number of bits comprised in the second bit block is greater than 11.

In one embodiment, the number of bit(s) comprised in the second bit block is no greater than a second threshold.

In one embodiment, the number of bits comprised in the second bit block is greater than a second threshold.

In one embodiment, a sum of the number of bit(s) comprised in the first bit block and the number of bit(s) comprised in the second bit block is greater than 2 and no greater than 11.

In one embodiment, a sum of the number of bit(s) comprised in the first bit block and the number of bit(s) comprised in the second bit block is greater than 11.

In one embodiment, a sum of the number of bit(s) comprised in the first bit block and the number of bit(s) comprised in the second bit block is greater than 2.

In one embodiment, a sum of the number of bit(s) comprised in the first bit block and the number of bit(s) comprised in the second bit block is no greater than a second threshold.

In one embodiment, a sum of the number of bit(s) comprised in the first bit block and the number of bit(s) comprised in the second bit block is greater than a second threshold.

In one embodiment, a first number is no greater than a second threshold, at least one of the number of bit(s) comprised in the first bit block or the number of bit(s) comprised in the second bit block being used to determine the first number.

In one embodiment, a first number is greater than a second threshold, at least one of the number of bit(s) comprised in the first bit block or the number of bit(s) comprised in the second bit block being used to determine the first number.

In one embodiment, the first number is equal to: a result yielded by the number of bit(s) comprised in the first bit block divided by a first ratio being rounded to a nearest integer further plus the number of bit(s) comprised in the second bit block.

In one embodiment, the first number is equal to: a result yielded by the number of bit(s) comprised in the second bit block divided by a first ratio being rounded to a nearest integer further plus the number of bit(s) comprised in the first bit block.

In one embodiment, the first number is equal to: a result yielded by the number of bit(s) comprised in the first bit block multiplied by a first ratio being rounded to a nearest integer further plus the number of bit(s) comprised in the second bit block.

In one embodiment, the first number is equal to: a result yielded by the number of bit(s) comprised in the second bit block multiplied by a first ratio being rounded to a nearest integer further plus the number of bit(s) comprised in the first bit block.

In one embodiment, the phrase of rounding to a nearest integer in the present application means: rounding up to a nearest integer.

In one embodiment, the phrase of rounding to a nearest integer in the present application means: rounding down to a nearest integer.

In one embodiment, the first ratio in the present application is a ratio of two coding rates, the two coding rates being configured by an RRC signaling or a MAC CE signaling.

In one embodiment, the first signal is a part of a signal transmitted in a PUCCH other than transmissions of DeModulation Reference Signal (DM-RS).

In one embodiment, a number of resource elements occupied by the first signal in time-frequency domain is equal to: MRB×Nsc×Nsymbol; the MRB is equal to a number of resource blocks comprised in all or part of the first time-frequency resource pool in frequency domain, the Nsc is equal to a number of subcarrier(s) other than subcarrier(s) used for DM-RS transmission in each Resource Block (RB), and the Nsymbol is equal to a number of multicarrier symbol(s) other than multicarrier symbol(s) used for DM-RS transmission in the first time-frequency resource pool in time domain.

In one embodiment, the first amount of adjustment indicates the target amount of adjustment.

In one embodiment, the first amount of adjustment explicitly indicates the target amount of adjustment.

In one embodiment, the first amount of adjustment implicitly indicates the target amount of adjustment.

In one embodiment, the target amount of adjustment is equal to the first amount of adjustment plus a pre-defined or configurable offset.

In one embodiment, the target amount of adjustment is no smaller than the first amount of adjustment.

In one embodiment, the first transmission power is measured in Watts (W).

In one embodiment, the first transmission power is measured in dBm.

In one embodiment, the first transmission power is equal to a greater value between an upper-limit transmission power and a target transmission power, where the target transmission power is linear with the target amount of adjustment, and the upper-limit transmission power is pre-defined or configurable.

In one embodiment, the first transmission power is equal to a smaller value between an upper-limit transmission power and a target transmission power, where the target transmission power is linear with the target amount of adjustment, and the upper-limit transmission power is pre-defined or configurable.

In one embodiment, the statement in the present application that the first transmission power is equal to a smaller value between an upper-limit transmission power and a target transmission power includes a meaning that: the first transmission power = min {the upper-limit transmission power, the target transmission power}.

In one embodiment, the statement in the claims that "the first amount of adjustment is used to determine a target amount of adjustment" includes the following meaning: at least a latter of the first bit block and the second bit block is used to determine a second amount of adjustment, the target amount of adjustment being equal to a maximum one of the first amount of adjustment and the second amount of adjustment;

In one embodiment, the statement in the claims that "the first amount of adjustment is used to determine a target amount of adjustment" includes the following meaning: the target amount of adjustment is the first amount of adjustment.

In one embodiment, the statement in the claims that "a number of bit(s) comprised in the first bit block and a first resource size are used together to determine a first amount of adjustment" includes the following meaning: a first amount of calculation is equal to a sum of the number of the bit(s) comprised in the first bit block and a number of Cyclic Redundancy Check (CRC) bit(s) for the first bit block being divided by the first resource size; the first amount of calculation is used to determine the first amount of adjustment.

In one embodiment, the statement in the claims that "a number of bit(s) comprised in the first bit block and a first resource size are used together to determine a first amount of adjustment" includes the following meaning: when the number of the bit(s) comprised in the first bit block is no greater than a first threshold, a first information bit number and the first resource size are used together to determine the first amount of adjustment, the first information bit number being a number of Hybrid Automatic Repeat reQuest-ACKnowledgement (HARQ-ACK) information bit(s) used for obtaining a transmission power of a Physical Uplink Control CHannel (PUCCH); when the number of the bit(s) comprised in the first bit block is greater than a first threshold, a first amount of calculation is equal to a sum of the number of the bit(s) comprised in the first bit block and a number of CRC bit(s) for the first bit block being divided by the first resource size, the first amount of calculation being used to determine the first amount of adjustment; the first threshold is pre-defined or configurable.

### Embodiment 2

Embodiment 2 illustrates a schematic diagram of a network architecture according to the present application, as shown in FIG. 2.

FIG. 2 is a diagram illustrating a network architecture 200 of 5G NR, Long-Term Evolution (LTE) and Long-Term Evolution Advanced (LTE-A) systems. The 5G NR or LTE network architecture 200 may be called an Evolved Packet System (EPS) 200 or other suitable terminology. The EPS 200 may comprise one or more UEs 201, an NG-RAN 202, an Evolved Packet Core/5G-Core Network (EPC/5G-CN) 210, a Home Subscriber Server (HSS) 220 and an Internet Service 230. The EPS 200 may be interconnected with other access networks. For simple description, the entities/interfaces are not shown. As shown in FIG. 2, the EPS 200 provides packet switching services. Those skilled in the art will find it easy to understand that various concepts presented throughout the present application can be extended to networks providing circuit switching services or other cellular networks. The NG-RAN 202 comprises an NR node B (gNB) 203 and other gNBs 204. The gNB 203 provides UE 201 oriented user plane and control plane terminations. The gNB 203 may be connected to other gNBs 204 via an Xn interface (for example, backhaul). The gNB 203 may be called a base station, a base transceiver station, a radio base station, a radio transceiver, a transceiver function, a Base Service Set (BSS), an Extended Service Set (ESS), a Transmitter Receiver Point (TRP) or some other applicable terms. The gNB 203 provides an access point of the EPC/5G-CN 210 for the UE 201. Examples of UE 201 include cellular phones, smart phones, Session Initiation Protocol (SIP) phones, laptop computers, Personal Digital Assistant (PDA), Satellite Radios, non-terrestrial base station communications, satellite mobile communications, Global Positioning Systems (GPSs), multimedia devices, video devices, digital audio players (for example, MP3 players), cameras, games consoles, unmanned aerial vehicles, air vehicles, narrow-band physical network equipment, machine-type communication equipment, land vehicles, automobiles, wearable equipment, or any other devices having similar functions. Those skilled in the art also can call the UE 201 a mobile station, a subscriber station, a mobile unit, a subscriber unit, a wireless unit, a remote unit, a mobile device, a wireless device, a radio communication device, a remote device, a mobile subscriber station, an access terminal, a mobile terminal, a wireless terminal, a remote terminal, a handset, a user proxy, a mobile client, a client or some other appropriate terms. The gNB 203 is connected to the EPC/5G-CN 210 via an S1/NG interface. The EPC/5G-CN 210 comprises a Mobility Management Entity (MME)/ Authentication Management Field (AMF)/ User Plane Function (DPF) 211, other MMEs/AMFs/UPFs 214, a Service Gateway (S-GW) 212 and a Packet Date Network Gateway (P-GW) 213. The MME/AMF/LTPF 211 is a control node for processing a signaling between the UE 201 and the EPC/5G-CN 210. Generally, the MME/AMF/LTPF 211 provides bearer and connection management. All user Internet Protocol (IP) packets are transmitted through the S-GW 212. The S-GW 212 is connected to the P-GW 213. The P-GW 213 provides UE IP address allocation and other functions. The P-GW 213 is connected to the Internet Service 230. The Internet Service 230 comprises IP services corresponding to operators, specifically including Internet, Intranet, IP Multimedia Subsystem (IMS) and Packet Switching Streaming (PSS) services.

In one embodiment, the UE 201 corresponds to the first node in the present application.

In one embodiment, the UE 241 corresponds to the second node in the present application.

In one embodiment, the gNB 203 corresponds to the first node in the present application.

In one embodiment, the gNB203 corresponds to the second node in the present application.

In one embodiment, the UE 241 corresponds to the first node in the present application.

In one embodiment, the UE 201 corresponds to the second node in the present application.

### Embodiment 3

Embodiment 3 illustrates a schematic diagram of a radio protocol architecture of a user plane and a control plane according to the present application, as shown in FIG. 3. FIG. 3 is a schematic diagram illustrating an embodiment of a radio protocol architecture of a user plane 350 and a control plane 300. In FIG. 3, the radio protocol architecture for a control plane 300 between a first communication node (UE, gNB or, RSU in V2X) and a second communication node (gNB, UE, or RSU in V2X), or between two UEs, is represented by three layers, which are a layer 1, a layer 2 and a layer 3, respectively. The layer 1 (L1) is the lowest layer which performs signal processing functions of various PHY layers. The L1 is called PHY 301 in the present application. The layer 2 (L2) 305 is above the PHY 301, and is in charge of the link between the first communication node and the second communication node or between two UEs via the PHY 301. The L2 305 comprises a Medium Access Control (MAC) sublayer 302, a Radio Link Control (RLC) sublayer 303 and a Packet Data Convergence Protocol (PDCP) sublayer 304. All the three sublayers terminate at the second communication nodes of the network side. The PDCP sublayer 304 provides multiplexing among variable radio bearers and logical channels. The PDCP sublayer 304 provides security by encrypting a packet and provides support for handover of a first communication node between second communication nodes. The RLC sublayer 303 provides segmentation and reassembling of a higher-layer packet, retransmission of a lost packet, and reordering of a packet so as to compensate the disordered receiving caused by Hybrid Automatic Repeat reQuest (HARQ). The MAC sublayer 302 provides multiplexing between a logical channel and a transport channel. The MAC sublayer 302 is also responsible for allocating between first communication nodes various radio resources (i.e., resource block) in a cell. The MAC sublayer 302 is also in charge of HARQ operation. In the control plane 300, The RRC sublayer 306 in the L3 layer is responsible for acquiring radio resources (i.e., radio bearer) and configuring the lower layer using an RRC signaling between the second communication node and the first communication node. The radio protocol architecture in the user plane 350 comprises the L1 layer and the L2 layer. In the user plane 350, the radio protocol architecture used for the first communication node and the second communication node in a PHY layer 351, a PDCP sublayer 354 of the L2 layer 355, an RLC sublayer 353 of the L2 layer 355 and a MAC sublayer 352 of the L2 layer 355 is almost the same as the radio protocol architecture used for corresponding layers and sublayers in the control plane 300, but the PDCP sublayer 354 also provides header compression used for higher-layer packet to reduce radio transmission overhead. The L2 layer 355 in the user plane 350 also comprises a Service Data Adaptation Protocol (SDAP) sublayer 356, which is in charge of the mapping between QoS streams and a Data Radio Bearer (DRB), so as to support diversified traffics. Although not described in FIG. 3, the first communication node may comprise several higher layers above the L2 355, such as a network layer (i.e., IP layer) terminated at a P-GW 213 of the network side and an application layer terminated at the other side of the connection (i.e., a peer UE, a server, etc.).

In one embodiment, the radio protocol architecture in FIG. 3 is applicable to the first node in the present application.

In one embodiment, the radio protocol architecture in FIG. 3 is applicable to the second node in the present application.

In one embodiment, the first information block in the present application is generated by the RRC sublayer 306.

In one embodiment, the first information block in the present application is generated by the MAC sublayer 302.

In one embodiment, the first information block in the present application is generated by the MAC sublayer 352.

In one embodiment, the first signaling in the present application is generated by the RRC sublayer 306.

In one embodiment, the first signaling in the present application is generated by the MAC sublayer 302.

In one embodiment, the first signaling in the present application is generated by the MAC sublayer 352.

In one embodiment, the first signaling in the present application is generated by the PHY 301.

In one embodiment, the first signaling in the present application is generated by the PHY 351.

In one embodiment, the first bit block in the present application is generated by the RRC sublayer 306.

In one embodiment, the first bit block in the present application is generated by the SDAP sublayer 356.

In one embodiment, the first bit block in the present application is generated by the MAC sublayer 302.

In one embodiment, the first bit block in the present application is generated by the MAC sublayer 352.

In one embodiment, the first bit block in the present application is generated by the PHY 301.

In one embodiment, the first bit block in the present application is generated by the PHY 351.

In one embodiment, the second bit block in the present application is generated by the RRC sublayer 306.

In one embodiment, the second bit block in the present application is generated by the SDAP sublayer 356.

In one embodiment, the second bit block in the present application is generated by the MAC sublayer 302.

In one embodiment, the second bit block in the present application is generated by the MAC sublayer 352.

In one embodiment, the second bit block in the present application is generated by the PHY 301.

In one embodiment, the second bit block in the present application is generated by the PHY 351.

In one embodiment, the first signal in the present application is generated by the PHY 301.

In one embodiment, the first signal in the present application is generated by the PHY 351.

### Embodiment 4

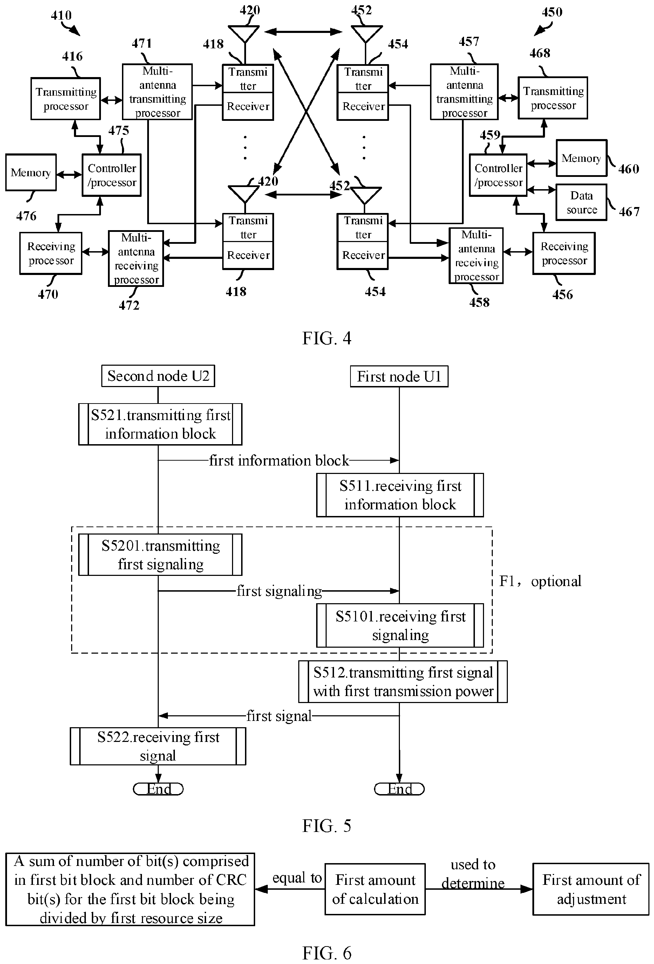

Embodiment 4 illustrates a schematic diagram of a first communication device and a second communication device according to the present application, as shown in FIG. 4. FIG. 4 is a block diagram of a first communication device 410 and a second communication device 450 in communication with each other in an access network.

The first communication device 410 comprises a controller/processor 475, a memory 476, a receiving processor 470, a transmitting processor 416, a multi-antenna receiving processor 472, a multi-antenna transmitting processor 471, a transmitter/receiver 418 and an antenna 420.

The second communication device 450 comprises a controller/processor 459, a memory 460, a data source 467, a transmitting processor 468, a receiving processor 456, a multi-antenna transmitting processor 457, a multi-antenna receiving processor 458, a transmitter/receiver 454 and an antenna 452.

In a transmission from the first communication device 410 to the second communication device 450, at the first communication device 410, a higher layer packet from a core network is provided to the controller/processor 475. The controller/processor 475 provides functions of the L2 layer. In the transmission from the first communication device 410 to the second communication device 450, the controller/processor 475 provides header compression, encryption, packet segmentation and reordering, and multiplexing between a logical channel and a transport channel, and radio resource allocation of the second communication device 450 based on various priorities. The controller/processor 475 is also in charge of a retransmission of a lost packet and a signaling to the second communication device 450. The transmitting processor 416 and the multi-antenna transmitting processor 471 perform various signal processing functions used for the L1 layer (i.e., PHY). The transmitting processor 416 performs coding and interleaving so as to ensure a Forward Error Correction (FEC) at the second communication device 450 side and the mapping to signal clusters corresponding to each modulation scheme (i.e., BPSK, QPSK, M-PSK, and M-QAM, etc.). The multi-antenna transmitting processor 471 performs digital spatial precoding, which includes precoding based on codebook and precoding based on non-codebook, and beamforming processing on encoded and modulated signals to generate one or more spatial streams. The transmitting processor 416 then maps each spatial stream into a subcarrier. The mapped symbols are multiplexed with a reference signal (i.e., pilot frequency) in time domain and/or frequency domain, and then they are assembled through Inverse Fast Fourier Transform (IFFT) to generate a physical channel carrying time-domain multicarrier symbol streams. After that the multi-antenna transmitting processor 471 performs transmission analog precoding/beamforming on the time-domain multicarrier symbol streams. Each transmitter 418 converts a baseband multicarrier symbol stream provided by the multi-antenna transmitting processor 471 into a radio frequency (RF) stream, which is later provided to different antennas 420.

In a transmission from the first communication device 410 to the second communication device 450, at the second communication device 450, each receiver 454 receives a signal via a corresponding antenna 452. Each receiver 454 recovers information modulated to the RF carrier, and converts the radio frequency stream into a baseband multicarrier symbol stream to be provided to the receiving processor 456. The receiving processor 456 and the multi-antenna receiving processor 458 perform signal processing functions of the L1 layer. The multi-antenna receiving processor 458 performs reception analog precoding/beamforming on a baseband multicarrier symbol stream provided by the receiver 454. The receiving processor 456 converts baseband multicarrier symbol streams which have gone through reception analog precoding/beamforming operations from time domain to frequency domain using FFT. In frequency domain, physical layer data signals and reference signals are de-multiplexed by the receiving processor 456, where the reference signals are used for channel estimation while data signals are processed in the multi-antenna receiving processor 458 by multi-antenna detection to recover any spatial stream targeting the second communication device 450. Symbols on each spatial stream are demodulated and recovered in the receiving processor 456 to generate a soft decision. Then the receiving processor 456 decodes and de-interleaves the soft decision to recover the higher-layer data and control signal transmitted by the first communication device 410 on the physical channel. Next, the higher-layer data and control signal are provided to the controller/processor 459. The controller/processor 459 provides functions of the L2 layer. The controller/processor 459 can be associated with a memory 460 that stores program code and data. The memory 460 can be called a computer readable medium. In the transmission from the first communication device 410 to the second communication device 450, the controller/processor 459 provides demultiplexing between a transport channel and a logical channel, packet reassembling, decrypting, header decompression and control signal processing so as to recover a higher-layer packet from the core network. The higher-layer packet is later provided to all protocol layers above the L2 layer. Or various control signals can be provided to the L3 for processing.

In a transmission from the second communication device 450 to the first communication device 410, at the second communication device 450, the data source 467 is configured to provide a higher-layer packet to the controller/processor 459. The data source 467 represents all protocol layers above the L2 layer. Similar to a transmitting function of the first communication device 410 described in the transmission from the first communication node 410 to the second communication node 450, the controller/processor 459 performs header compression, encryption, packet segmentation and reordering, and multiplexing between a logical channel and a transport channel based on radio resource allocation of the first communication device 410 so as to provide the L2 layer functions used for the user plane and the control plane. The controller/processor 459 is also responsible for a retransmission of a lost packet, and a signaling to the first communication device 410. The transmitting processor 468 performs modulation and mapping, as well as channel coding, and the multi-antenna transmitting processor 457 performs digital multi-antenna spatial precoding, including precoding based on codebook and precoding based on non-codebook, and beamforming. The transmitting processor 468 then modulates generated spatial streams into multicarrier/single-carrier symbol streams. The modulated symbol streams, after being subjected to analog precoding/beamforming in the multi-antenna transmitting processor 457, are provided from the transmitter 454 to each antenna 452. Each transmitter 454 first converts a baseband symbol stream provided by the multi-antenna transmitting processor 457 into a radio frequency symbol stream, and then provides the radio frequency symbol stream to the antenna 452.

In a transmission from the second communication device 450 to the first communication device 410, the function of the first communication device 410 is similar to the receiving function of the second communication device 450 described in the transmission from the first communication device 410 to the second communication device 450. Each receiver 418 receives a radio frequency signal via a corresponding antenna 420, converts the received radio frequency signal into a baseband signal, and provides the baseband signal to the multi-antenna receiving processor 472 and the receiving processor 470. The receiving processor 470 and the multi-antenna receiving processor 472 jointly provide functions of the L1 layer. The controller/processor 475 provides functions of the L2 layer. The controller/processor 475 can be associated with the memory 476 that stores program code and data. The memory 476 can be called a computer readable medium. In the transmission between the second communication device 450 and the first communication device 410, the controller/processor 475 provides de-multiplexing between a transport channel and a logical channel, packet reassembling, decrypting, header decompression, control signal processing so as to recover a higher-layer packet from the second communication device (UE) 450. The higher-layer packet coming from the controller/processor 475 may be provided to the core network.

In one embodiment, the first node in the present application comprises the second communication device 450, and the second node in the present application comprises the first communication device 410.

In one subembodiment, the first node is a UE, and the second node is a UE.

In one subembodiment, the first node is a UE, and the second node is a relay node.

In one subembodiment, the first node is a relay node, and the second node is a UE.

In one subembodiment, the first node is a UE, and the second node is a base station.

In one subembodiment, the first node is a relay node, and the second node is a base station.

In one subembodiment, the second node is a UE, and the first node is a base station.

In one subembodiment, the second node is a relay node, and the first node is a base station.

In one subembodiment, the second communication device 450 comprises: at least one controller/processor; the at least one controller/processor is in charge of HARQ operation.

In one subembodiment, the first communication device 410 comprises: at least one controller/processor; the at least one controller/processor is in charge of HARQ operation.

In one subembodiment, the first communication device 410 comprises: at least one controller/processor; the at least one controller/processor is in charge of error detections using ACK and/or NACK protocols to support HARQ operation.

In one embodiment, the second communication node 450 comprises at least one processor and at least one memory, the at least one memory comprises computer program codes; the at least one memory and the computer program codes are configured to be used in collaboration with the at least one processor. The second communication device 450 at least: receives the first information block in the present application, the first information block being used to determine the first time-frequency resource pool in the present application; and transmits the first signal in the present application with the first transmission power in the present application, the first signal carrying the first bit block and the second bit block in the present application, the first bit block comprising at least one control information bit, and the second bit block comprising at least one control information bit, where a priority of the control information bit(s) comprised in the first bit block and a priority of the control information bit(s) comprised in the second bit block are different; herein, time-frequency resources occupied by the first signal belong to the first time-frequency resource pool; resource element(s) (RE(s)) comprised in the first time-frequency resource pool being used for the first bit block and RE(s) comprised in the first time-frequency resource pool being used for the second bit block are orthogonal; a number of bit(s) comprised in the first bit block and the first resource size in the present application are used together to determine the first amount of adjustment in the present application, the first resource size being a number of the RE(s) comprised in the first time-frequency resource pool being used for the first bit block; the first amount of adjustment is used to determine the target amount of adjustment in the present application, the target amount of adjustment being used to determine the first transmission power.

In one subembodiment, the second communication device 450 corresponds to the first node in the present application.

In one embodiment, the second communication node 450 comprises a memory that stores a computer readable instruction program, the computer readable instruction program generates actions when executed by at least one processor, which include: receiving the first information block in the present application, the first information block being used to determine the first time-frequency resource pool in the present application; and transmitting the first signal in the present application with the first transmission power in the present application, the first signal carrying the first bit block and the second bit block in the present application, the first bit block comprising at least one control information bit, and the second bit block comprising at least one control information bit, where a priority of the control information bit(s) comprised in the first bit block and a priority of the control information bit(s) comprised in the second bit block are different; herein, time-frequency resources occupied by the first signal belong to the first time-frequency resource pool; resource element(s) (RE(s)) comprised in the first time-frequency resource pool being used for the first bit block and RE(s) comprised in the first time-frequency resource pool being used for the second bit block are orthogonal; a number of bit(s) comprised in the first bit block and the first resource size in the present application are used together to determine the first amount of adjustment in the present application, the first resource size being a number of the RE(s) comprised in the first time-frequency resource pool being used for the first bit block; the first amount of adjustment is used to determine the target amount of adjustment in the present application, the target amount of adjustment being used to determine the first transmission power.

In one subembodiment, the second communication device 450 corresponds to the first node in the present application.

In one embodiment, the first communication device 410 comprises at least one processor and at least one memory, the at least one memory comprises computer program codes; the at least one memory and the computer program codes are configured to be used in collaboration with the at least one processor. The first communication device 410 at least: transmits the first information block in the present application, the first information block being used to determine the first time-frequency resource pool in the present application; and receives the first signal in the present application transmitted with the first transmission power in the present application, the first signal carrying the first bit block and the second bit block in the present application, the first bit block comprising at least one control information bit, and the second bit block comprising at least one control information bit, where a priority of the control information bit(s) comprised in the first bit block and a priority of the control information bit(s) comprised in the second bit block are different; herein, time-frequency resources occupied by the first signal belong to the first time-frequency resource pool; resource element(s) (RE(s)) comprised in the first time-frequency resource pool being used for the first bit block and RE(s) comprised in the first time-frequency resource pool being used for the second bit block are orthogonal; a number of bit(s) comprised in the first bit block and the first resource size in the present application are used together to determine the first amount of adjustment in the present application, the first resource size being a number of the RE(s) comprised in the first time-frequency resource pool being used for the first bit block; the first amount of adjustment is used to determine the target amount of adjustment in the present application, the target amount of adjustment being used to determine the first transmission power.

In one subembodiment, the first communication device 410 corresponds to the second node in the present application.

In one embodiment, the first communication device 410 comprises a memory that stores a computer readable instruction program, the computer readable instruction program generates actions when executed by at least one processor, which include: transmitting the first information block in the present application, the first information block being used to determine the first time-frequency resource pool in the present application; and receiving the first signal in the present application transmitted with the first transmission power in the present application, the first signal carrying the first bit block and the second bit block in the present application, the first bit block comprising at least one control information bit, and the second bit block comprising at least one control information bit, where a priority of the control information bit(s) comprised in the first bit block and a priority of the control information bit(s) comprised in the second bit block are different; herein, time-frequency resources occupied by the first signal belong to the first time-frequency resource pool; resource element(s) (RE(s)) comprised in the first time-frequency resource pool being used for the first bit block and RE(s) comprised in the first time-frequency resource pool being used for the second bit block are orthogonal; a number of bit(s) comprised in the first bit block and the first resource size in the present application are used together to determine the first amount of adjustment in the present application, the first resource size being a number of the RE(s) comprised in the first time-frequency resource pool being used for the first bit block; the first amount of adjustment is used to determine the target amount of adjustment in the present application, the target amount of adjustment being used to determine the first transmission power.

In one subembodiment, the first communication device 410 corresponds to the second node in the present application.

In one embodiment, at least one of the antenna 452, the receiver 454, the multi-antenna receiving processor 458, the receiving processor 456, the controller/processor 459, the memory 460, or the data source 467 is used for receiving the first information block in the present application.

In one embodiment, at least one of the antenna 420, the transmitter 418, the multi-antenna transmitting processor 471, the transmitting processor 416, the controller/processor 475 or the memory 476 is used for transmitting the first information block in the present application.

In one embodiment, at least one of the antenna 452, the receiver 454, the multi-antenna receiving processor 458, the receiving processor 456, the controller/processor 459, the memory 460, or the data source 467 is used for receiving the first signaling in the present application.

In one embodiment, at least one of the antenna 420, the transmitter 418, the multi-antenna transmitting processor 471, the transmitting processor 416, the controller/processor 475 or the memory 476 is used for transmitting the first signaling in the present application.

In one embodiment, at least one of the antenna 452, the transmitter 454, the multi-antenna transmitting processor 458, the transmitting processor 468, the controller/processor 459, the memory 460, or the data source 467 is used for transmitting the first signal in the present application with the first transmission power in the present application.

In one embodiment, at least one of the antenna 420, the receiver 418, the multi-antenna receiving processor 472, the receiving processor 470, the controller/processor 475, or the memory 476 is used for receiving the first signal in the present application.

### Embodiment 5

Embodiment 5 illustrates a flowchart of signal transmission according to one embodiment of the present application, as shown in FIG. 5. In FIG. 5, a first node U1 and a second node U2 are in communications via an air interface. Steps marked by the dotted-line box F1 are optional.

The first node U1 receives a first information block in step S511; and receives a first signaling in step S5101; and transmits a first signal with a first transmission power in step S512.

The second node U2 transmits a first information block in step S521, and transmits a first signaling in step S5201; and receives a first signal in step S522.

In Embodiment 5, the first information block is used to determine a first time-frequency resource pool; the first signal carries a first bit block and a second bit block, the first bit block comprising at least one control information bit, and the second bit block comprising at least one control information bit, where a priority of the control information bit(s) comprised in the first bit block and a priority of the control information bit(s) comprised in the second bit block are different; time-frequency resources occupied by the first signal belong to the first time-frequency resource pool; resource element(s) (RE(s)) comprised in the first time-frequency resource pool being used for the first bit block and RE(s) comprised in the first time-frequency resource pool being used for the second bit block are orthogonal; a number of bit(s) comprised in the first bit block and a first resource size are used together to determine a first amount of adjustment, the first resource size being a number of the RE(s) comprised in the first time-frequency resource pool being used for the first bit block; the first amount of adjustment is used to determine a target amount of adjustment, and the first transmission power is equal to a smaller value between an upper-limit transmission power and a target transmission power, the target amount of adjustment being used to determine the target transmission power, and the upper-limit transmission power being pre-defined or configurable.

In one subembodiment of Embodiment 5, a first amount of calculation is equal to a sum of the number of the bit(s) comprised in the first bit block and a number of Cyclic Redundancy Check (CRC) bit(s) for the first bit block being divided by the first resource size; the first amount of calculation is used to determine the first amount of adjustment.

In one subembodiment of Embodiment 5, when the number of the bit(s) comprised in the first bit block is no greater than a first threshold, a first information bit number and the first resource size are used together to determine the first amount of adjustment, the first information bit number being a number of Hybrid Automatic Repeat reQuest- ACKnowledgement (HARQ-ACK) information bit(s) used for obtaining a transmission power of a Physical Uplink Control CHannel (PUCCH); when the number of the bit(s) comprised in the first bit block is greater than a first threshold, a first amount of calculation is equal to a sum of the number of the bit(s) comprised in the first bit block and a number of CRC bit(s) for the first bit block being divided by the first resource size, the first amount of calculation being used to determine the first amount of adjustment; the first threshold is pre-defined or configurable.

In one subembodiment of Embodiment 5, at least a latter of the first bit block and the second bit block is used to determine a second amount of adjustment, the target amount of adjustment being equal to a maximum one of the first amount of adjustment and the second amount of adjustment;

In one subembodiment of Embodiment 5, the target amount of adjustment is the first amount of adjustment.

In one subembodiment of Embodiment 5, coded bits generated by the first bit block and the second bit block respectively using channel codings with different coding rates are used for generating the first signal.

In one subembodiment of Embodiment 5, the first time-frequency resource pool in the present application is resources comprised by a first PUCCH resource in time-frequency domain, the first PUCCH resource belonging to a first PUCCH resource set, the first PUCCH resource set comprising at least one PUCCH resource, and the first signaling being used to determine the first PUCCH resource from the first PUCCH resource set; the first PUCCH resource set is one of X2 candidate PUCCH resource sets, where X2 is a positive integer greater than 1, the first information block being used to determine the X2 candidate PUCCH resource sets; at least one of a number of bit(s) comprised in the first bit block or a number of bit(s) comprised in the second bit block is used to determine the first PUCCH resource set from the X2 candidate PUCCH resource sets.

In one embodiment, the first node U1 is the first node in the present application.

In one embodiment, the second node U2 is the second node in the present application.

In one embodiment, the first node U1 is a UE.

In one embodiment, the first node U1 is a base station.

In one embodiment, the second node U2 is a base station.

In one embodiment, the second node U2 is a UE.

In one embodiment, an air interface between the second node U2 and the first node U1 is a Uu interface.

In one embodiment, an air interface between the second node U2 and the first node U1 includes a cellular link.

In one embodiment, an air interface between the second node U2 and the first node U1 is a PCS interface.

In one embodiment, an air interface between the second node U2 and the first node U1 includes a sidelink.

In one embodiment, an air interface between the second node U2 and the first node U1 includes a radio interface between a base station and a UE.

In one embodiment, an air interface between the second node U2 and the first node U1 includes a radio interface between a UE and another UE.

In one embodiment, when the number of the bit(s) comprised in the first bit block is no greater than a first threshold, a first information bit number and the first resource size are used together to determine the first amount of adjustment, the first information bit number being a number of HARQ-ACK information bit(s), with a priority equal to control information bit(s) comprised in the first bit block, and which is(are) used for obtaining a transmission power of a PUCCH; when the number of the bit(s) comprised in the first bit block is greater than a first threshold, a first amount of calculation is equal to a sum of the number of the bit(s) comprised in the first bit block and a number of CRC bit(s) for the first bit block being divided by the first resource size, the first amount of calculation being used to determine the first amount of adjustment; the first threshold is pre-defined or configurable.

In one embodiment, the number of bits comprised in the first bit block is greater than 2; when the number of the bit(s) comprised in the first bit block is no greater than a first threshold, a first information bit number and the first resource size are used together to determine the first amount of adjustment, the first information bit number being a number of HARQ-ACK information bit(s), with a priority equal to control information bit(s) comprised in the first bit block, and which is(are) used for obtaining a transmission power of a PUCCH; when the number of the bit(s) comprised in the first bit block is greater than a first threshold, a first amount of calculation is equal to a sum of the number of the bit(s) comprised in the first bit block and a number of CRC bit(s) for the first bit block being divided by the first resource size, the first amount of calculation being used to determine the first amount of adjustment; the first threshold is pre-defined or configurable; at least one of the first bit block and the second bit block is used to determine a first number, the first number being used to determine the third amount of calculation; the second amount of adjustment is equal to 10×log10 (KU the third amount of calculation), where K1 is pre-defined or configurable; or, the second amount of adjustment is equal to 10×log10 (2^b-1), where the b is equal to K2 multiplied by the third amount of calculation, where the K2 is pre-defined or configurable; the target amount of adjustment is equal to a maximum one of the first amount of adjustment and the second amount of adjustment; a target transmission power is equal to a sum of the target amount of adjustment and other power control components, where other power control components are configurable or related to the first time-frequency resource pool or derived according to indication; the first transmission power is equal to a smaller value between an upper-limit transmission power and a target transmission power, the upper-limit transmission power being pre-defined or configurable.

In one subembodiment, the first threshold is equal to 11.

In one subembodiment, when the number of the bit(s) comprised in the first bit block is no greater than the first threshold: A second amount of calculation is equal to a sum of the three of the first information bit number, the number of SR information bit(s) comprised in the first bit block and the number of CSI information bit(s) comprised in the first bit block being divided by the first resource size, while the first amount of adjustment is equal to 10×log10 (K1×the second amount of calculation), where K1 is pre-defined or configurable.

In one subembodiment, when the number of the bit(s) comprised in the first bit block is greater than the first threshold, the first amount of adjustment is equal to 10×log10 (2^b-1), where the b is equal to K2 multiplied by the first amount of calculation, where the K2 is pre-defined or configurable.

In one embodiment, the number of bits comprised in the first bit block is greater than 2, and the number of bits comprised in the second bit block is greater than 11.

In one embodiment, the number of bits comprised in the first bit block is greater than 2 and no greater than 11, and the number of bits comprised in the second bit block is greater than 11.

In one embodiment, the number of bits comprised in the first bit block is greater than 11, and a sum of the number of bits comprised in the first bit block and the number of bits comprised in the second bit block is greater than 11.

In one embodiment, the number of bits comprised in the first bit block is greater than 11, and the number of bits comprised in the second bit block is greater than 11.

In one embodiment, the number of bits comprised in the first bit block is greater than 11, and the number of bits comprised in the second bit block is greater than 2 and no greater than 11.

In one embodiment, the number of bits comprised in the first bit block is greater than 2, and the number of bits comprised in the second bit block is greater than 2 and no greater than 11.

In one embodiment, the number of bits comprised in the first bit block is greater than 2 and no greater than 11, and the number of bits comprised in the second bit block is greater than 2 and no greater than 11.

In one embodiment, the number of bits comprised in the first bit block is greater than 2, and a sum of the number of bits comprised in the first bit block and the number of bits comprised in the second bit block is greater than 11.

In one embodiment, the number of bits comprised in the first bit block is greater than 2 and no greater than 11, and a sum of the number of bits comprised in the first bit block and the number of bits comprised in the second bit block is greater than 11.

In one embodiment, the number of bits comprised in the first bit block is greater than 2, and at least one of the number of bits comprised in the first bit block or the number of bits comprised in the second bit block is used to determine a first number, the first number being greater than 11.

In one embodiment, the number of bits comprised in the first bit block is greater than 2 and no greater than 11, and at least one of the number of bits comprised in the first bit block or the number of bits comprised in the second bit block is used to determine a first number, the first number being greater than 11.

In one embodiment, the number of bits comprised in the first bit block is greater than 2, and the number of bits comprised in the second bit block is greater than a second threshold.

In one embodiment, the number of bits comprised in the first bit block is greater than 2, and the number of bits comprised in the second bit block is greater than 2 and no greater than a second threshold.

In one embodiment, the number of bits comprised in the first bit block is greater than 2 and no greater than a second threshold, and the number of bits comprised in the second bit block is greater than the second threshold.

In one embodiment, the number of bits comprised in the first bit block is greater than a second threshold, and a sum of the number of bits comprised in the first bit block and the number of bits comprised in the second bit block is greater than the second threshold.

In one embodiment, the number of bits comprised in the first bit block is greater than a second threshold, and the number of bits comprised in the second bit block is greater than the second threshold.

In one embodiment, the number of bits comprised in the first bit block is greater than a second threshold, and the number of bits comprised in the second bit block is greater than 2 and no greater than the second threshold.

In one embodiment, the number of bits comprised in the first bit block is greater than 2, and a sum of the number of bits comprised in the first bit block and the number of bits comprised in the second bit block is greater than a second threshold.

In one embodiment, the number of bits comprised in the first bit block is greater than 2 and no greater than a second threshold, and a sum of the number of bits comprised in the first bit block and the number of bits comprised in the second bit block is greater than the second threshold.

In one embodiment, the number of bits comprised in the first bit block is greater than 2, and at least one of the number of bits comprised in the first bit block or the number of bits comprised in the second bit block is used to determine a first number, the first number being greater than a second threshold.

In one embodiment, the number of bits comprised in the first bit block is greater than 2 and no greater than a second threshold, and at least one of the number of bits comprised in the first bit block or the number of bits comprised in the second bit block is used to determine a first number, the first number being greater than the second threshold.

In one embodiment, the second threshold is a positive integer that is pre-defined.

In one embodiment, the second threshold is a positive integer that is configurable.

In one embodiment, the number of bits comprised in the first bit block is greater than 2, and the number of bits comprised in the second bit block is greater than 2.

In one embodiment, the second threshold is no greater than 1706.

In one embodiment, the second threshold is equal to 11.

In one embodiment, the second threshold is equal to 22.

In one embodiment, the second threshold is equal to 4.

In one embodiment, the second threshold is the first threshold.

In one embodiment, the second threshold isn't the first threshold.

In one embodiment, the target amount of adjustment indicates the target transmission power.

In one embodiment, the target amount of adjustment explicitly indicates the target transmission power.

In one embodiment, the target amount of adjustment implicitly indicates the target transmission power.

In one embodiment, the target transmission power is equal to a sum of the target amount of adjustment and other power control components, where other power control components are configurable or related to the first time-frequency resource pool or derived according to indication.

In one embodiment, steps marked by the dotted-line box F1 exist.

In one embodiment, steps marked by the dotted-line box F1 do not exist.

### Embodiment 6

Embodiment 6 illustrates a schematic diagram of relations among a number of bit(s) comprised in a first bit block, a first resource size, a first amount of calculation and a first amount of adjustment according to one embodiment of the present application, as shown in FIG. 6.

In Embodiment 6, a first amount of calculation is equal to a sum of the number of bit(s) comprised in a first bit block and a number of CRC bit(s) for the first bit block being divided by a first resource size; the first amount of calculation is used to determine a first amount of adjustment.

In one embodiment, the number of bits comprised in the first bit block is greater than 11; a first amount of calculation is equal to a sum of the number of bit(s) comprised in the first bit block and a number of Cyclic Redundancy Check (CRC) bit(s) for the first bit block being divided by the first resource size; the first amount of calculation is used to determine the first amount of adjustment.

In one embodiment, the number of the CRC bit(s) for the first bit block is a positive integer.

In one embodiment, the number of the CRC bit(s) for the first bit block is equal to 0 or is a positive integer.

In one embodiment, the statement in the present application that the first amount of calculation is used to determine the first amount of adjustment means that the first amount of adjustment is equal to 10×log10 (2^b-1), where the b is equal to K2 multiplied by the first amount of calculation, where the K2 is pre-defined or configurable.

In one embodiment, the statement in the present application that the first amount of calculation is used to determine the first amount of adjustment means that the first amount of calculation explicitly or implicitly indicates the first amount of adjustment.

In one embodiment, the statement in the present application that the first amount of calculation is used to determine the first amount of adjustment means that the first amount of calculation is used for performing calculation to determine the first amount of adjustment.

In one embodiment, the statement in the present application that the first amount of calculation is used to determine the first amount of adjustment means that the first amount of adjustment is a function of the first amount of calculation.

In one embodiment, the statement in the present application that the first amount of calculation is used to determine the first amount of adjustment means that the first amount of adjustment is equal to the first amount of calculation plus a pre-defined or configurable offset.

### Embodiment 7

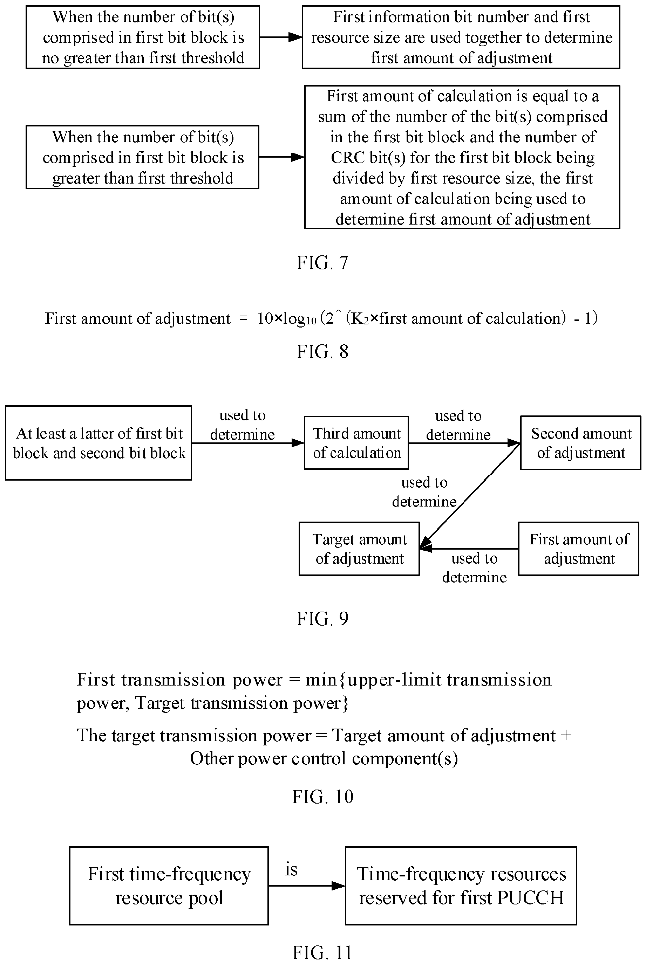

Embodiment 7 illustrates a schematic diagram explaining that a number of bit(s) comprised in a first bit block and a first resource size are used to determine a first amount of adjustment according to one embodiment of the present application, as shown in FIG. 7.

In Embodiment 7, when a number of bit(s) comprised in a first bit block is no greater than the first threshold, a first information bit number and a first resource size are used together to determine a first amount of adjustment; when a number of bit(s) comprised in a first bit block is greater than the first threshold, a first amount of calculation is equal to a sum of the number of the bit(s) comprised in the first bit block and a number of CRC bit(s) for the first bit block being divided by a first resource size, the first amount of calculation being used to determine a first amount of adjustment; the first threshold is pre-defined or configurable.

In one subembodiment of Embodiment 7, the number of bits comprised in the first bit block is greater than 2, and the first threshold is greater than 3.

In one embodiment, the statement that a first information bit number and the first resource size are used together to determine the first amount of adjustment means that: a second amount of calculation is equal to a sum of the three of the first information bit number, the number of SR information bit(s) comprised in the first bit block and the number of CSI information bit(s) comprised in the first bit block being divided by the first resource size, the second amount of calculation being used to determine the first amount of adjustment.

In one embodiment, the statement that a first information bit number and the first resource size are used together to determine the first amount of adjustment means that: a second amount of calculation is equal to a sum of the first information bit number and the number of SR information bit(s) comprised in the first bit block being divided by the first resource size, the second amount of calculation being used to determine the first amount of adjustment.

In one embodiment, the number of the SR information bit(s) comprised in the first bit block is equal to 0 or is a positive integer.

In one embodiment, the number of the CSI information bit(s) comprised in the first bit block is equal to 0 or is a positive integer.

In one embodiment, the statement that a first information bit number and the first resource size are used together to determine the first amount of adjustment means that a second amount of calculation is equal to the first information bit number being divided by the first resource size, the second amount of calculation being used to determine the first amount of adjustment.

In one embodiment, the statement that the second amount of calculation is used to determine the first amount of adjustment means that the first amount of adjustment is equal to 10×log10 (K1×the second amount of calculation), where K1 is pre-defined or configurable.

In one embodiment, the statement that the second amount of calculation is used to determine the first amount of adjustment means that the first amount of adjustment = 10×log10(K1× the second amount of calculation), where K1 =6.

In one embodiment, the statement that a first information bit number and the first resource size are used together to determine the first amount of adjustment means that the first amount of adjustment is equal to the first information bit number being multiplied by the first resource size.

In one embodiment, the first threshold is no greater than 1706.

In one embodiment, the first threshold is equal to 11.

In one embodiment, the first information bit number is a number of HARQ-ACK information bit(s) determined by the first node according to descriptions of a Type-1 HARQ-ACK codebook in 3GPP TS38.213, Section 9.1.2.1 and/or of a Type-2 HARQ-ACK codebook in 3GPP TS38.213, Section 9.1.3.1.

In one embodiment, the first information bit number is a number of HARQ-ACK information bit(s) determined by the first node according to descriptions of a Type-1 HARQ-ACK codebook in 3GPP TS38.213, Section 9.1.2.1 and/or of a Type-2 HARQ-ACK codebook in 3GPP TS38.213, Section 9.1.3.1, and having the same priority as control information bit(s) comprised in the first bit block.

In one embodiment, the first information bit number is expressed in nHARQ-ACK.

In one embodiment, the first information bit number is greater than 1.

In one embodiment, the first information bit number is equal to 0 or 1.

In one embodiment, the first information bit number is determined based on DCI detected by the first node.

In one embodiment, the first information bit number is a number of HARQ-ACK information bit(s) used for obtaining a transmission power of a PUCCH.

In one embodiment, the first information bit number is a number of HARQ-ACK information bit(s) used for obtaining a transmission power of a PUCCH and having the same priority as control information bit(s) comprised in the first bit block.

In one embodiment, the first amount of calculation being used to determine the first amount of adjustment means: the first amount of adjustment is equal to 10×log10 (2^b-1), where the b is equal to K2 multiplied by the first amount of calculation, where the K2 is pre-defined or configurable.

In one embodiment, the first amount of calculation being used to determine the first amount of adjustment means: the first amount of calculation explicitly or implicitly indicates the first amount of adjustment.

In one embodiment, the first amount of calculation being used to determine the first amount of adjustment means: the first amount of calculation is used for performing calculation to determine the first amount of adjustment.

In one embodiment, the first amount of calculation being used to determine the first amount of adjustment means: the first amount of adjustment is a function of the first amount of calculation.

In one embodiment, the first amount of calculation being used to determine the first amount of adjustment means: the first amount of adjustment is equal to the first amount of calculation plus a pre-defined or configurable offset.

### Embodiment 8

Embodiment 8 illustrates a schematic diagram explaining that a first amount of calculation is used to determine a first amount of adjustment according to one embodiment of the present application; as shown in FIG. 8.

In Embodiment 8, a first amount of adjustment is equal to 10×log10(2^(K2×first amount of calculation)-1), where K2 is pre-defined or configurable.

In one embodiment, K2 is greater than 0.

In one embodiment, K2 is equal to 2.4.

In one embodiment, K2 is -pre-defined.

In one embodiment, K2 is configurable.

### Embodiment 9

Embodiment 9 illustrates a schematic diagram of relations among a first bit block, a second bit block, a third amount of calculation, a second amount of adjustment, a first amount of adjustment and a target amount of adjustment according to one embodiment of the present application, as shown in FIG. 9.

In Embodiment 9, at least a latter one of a first bit block and a second bit block is used to determine a third amount of calculation, the third amount of calculation being used to determine a second amount of adjustment; the first amount of adjustment and the second amount of adjustment are used together to determine a target amount of adjustment.

In one subembodiment of Embodiment 9, the target amount of adjustment is equal to a maximum one of the first amount of adjustment and the second amount of adjustment.

In one subembodiment of Embodiment 9, the target amount of adjustment is equal to a minimum one of the first amount of adjustment and the second amount of adjustment.

In one subembodiment of Embodiment 9, at least a latter one of the number of bit(s) comprised in the first bit block and the number of bit(s) comprised in the second bit block is used to determine the third amount of calculation.

In one embodiment, both of the number of bit(s) comprised in the first bit block and the number of bit(s) comprised in the second bit block are used to determine the third amount of calculation.

In one embodiment, the third amount of calculation is equal to a sum of a number of bit(s) comprised in the first bit block plus a number of CRC bit(s) for the first bit block plus a number of bit(s) comprised in the second bit block plus a number of CRC bit(s) for the second bit block being divided by a second resource size, the second resource size being a number of Resource Element(s) (RE(s)) occupied by the first signal in time-frequency domain.

In one embodiment, at least one of a number of bit(s) comprised in the first bit block or a number of bit(s) comprised in the second bit block is used to determine a first number, the first number being greater than a second threshold; the third amount of calculation is equal to a sum of a number of bit(s) comprised in the first bit block plus a number of CRC bit(s) for the first bit block plus a number of bit(s) comprised in the second bit block plus a number of CRC bit(s) for the second bit block being divided by a second resource size, the second resource size being a number of Resource Element(s) (RE(s)) occupied by the first signal in time-frequency domain.

In one embodiment, a number of resource elements occupied by the first signal in time-frequency domain is equal to: MRB×Nsc×Nsymbol; the MRB is equal to a number of resource blocks comprised in all or part of the first time-frequency resource pool in frequency domain, Nsc is equal to a number of subcarrier(s) other than subcarrier(s) used for DM-RS transmission in each Resource Block (RB), and Nsymbol is equal to a number of multicarrier symbol(s) other than multicarrier symbol(s) used for DM-RS transmission in the first time-frequency resource pool in time domain.

In one embodiment, a number of RE(s) occupied by the first signal in time-frequency domain is a sum of a number of RE(s) comprised in the first time-frequency resource pool being used for the first bit block and a number of RE(s) comprised in the first time-frequency resource pool being used for the second bit block.

In one embodiment, the third amount of calculation is equal to a sum of a number of bit(s) comprised in the second bit block and a number of CRC bit(s) for the second bit block being divided by a number of RE(s) for the second bit block comprised in the first time-frequency resource pool.

In one embodiment, at least one of a number of bit(s) comprised in the first bit block or a number of bit(s) comprised in the second bit block is used to determine a first number, the first number being greater than a second threshold; the third amount of calculation is equal to a sum of a number of bit(s) comprised in the second bit block and a number of CRC bit(s) for the second bit block being divided by a number of RE(s) for the second bit block comprised in the first time-frequency resource pool.

In one embodiment, the third amount of calculation is equal to a sum of a second information bit number plus a number of SR information bit(s) comprised in the first bit block plus a number of CSI information bit(s) comprised in the first bit block plus a number of SR information bit(s) comprised in the second bit block plus a number of CSI information bit(s) comprised in the second bit block being divided by a second resource size, the second resource size being a number of RE(s) occupied by the first signal in time-frequency domain, and the second information bit number being a sum of a number of HARQ-ACK information bit(s) being used for obtaining a transmission power of a PUCCH and having the same priority as control information bit(s) comprised in the first bit block and a number of HARQ-ACK information bit(s) having the same priority as control information bit(s) comprised in the second bit block.

In one embodiment, at least one of a number of bit(s) comprised in the first bit block or a number of bit(s) comprised in the second bit block is used to determine a first number, the first number being no greater than a second threshold; the third amount of calculation is equal to a sum of a second information bit number plus a number of SR information bit(s) comprised in the first bit block plus a number of CSI information bit(s) comprised in the first bit block plus a number of SR information bit(s) comprised in the second bit block plus a number of CSI information bit(s) comprised in the second bit block being divided by a second resource size, the second resource size being a number of RE(s) occupied by the first signal in time-frequency domain, and the second information bit number being a sum of a number of HARQ-ACK information bit(s) being used for obtaining a transmission power of a PUCCH and having the same priority as control information bit(s) comprised in the first bit block and a number of HARQ-ACK information bit(s) having the same priority as control information bit(s) comprised in the second bit block.

In one embodiment, the second information bit number is a number of HARQ-ACK information bit(s) determined by the first node according to descriptions of a Type-1 HARQ-ACK codebook in 3GPP TS38.213, Section 9.1.2.1 and/or of a Type-2 HARQ-ACK codebook in 3GPP TS38.213, Section 9.1.3.1.

In one embodiment, the second information bit number is a total number of HARQ-ACK information bit(s) having the same priority as control information bit(s) comprised in the first bit block and HARQ-ACK information bit(s) having the same priority as control information bit(s) comprised in the second bit block, determined by the first node according to descriptions of a Type-1 HARQ-ACK codebook in 3GPP TS38.213, Section 9.1.2.1 and/or of a Type-2 HARQ-ACK codebook in 3GPP TS38.213, Section 9.1.3.1, and having the same priority as control information bit(s) comprised in the first bit block.

In one embodiment, the second information bit number is a number of HARQ-ACK information bit(s) determined by the first node according to descriptions of a Type-1 HARQ-ACK codebook in 3GPP TS38.213, Section 9.1.2.1 and/or of a Type-2 HARQ-ACK codebook in 3GPP TS38.213, Section 9.1.3.1, and having the same priority as control information bit(s) comprised in the second bit block.

In one embodiment, the number of the SR information bit(s) comprised in the first bit block is equal to 0 or is a positive integer.

In one embodiment, the number of the CSI information bit(s) comprised in the first bit block is equal to 0 or is a positive integer.

In one embodiment, the number of the SR information bit(s) comprised in the second bit block is equal to 0 or is a positive integer.

In one embodiment, the number of the CSI information bit(s) comprised in the second bit block is equal to 0 or is a positive integer.

In one embodiment, at least one of a number of bit(s) comprised in the first bit block or a number of bit(s) comprised in the second bit block is used to determine a first number; the third amount of calculation is equal to the first number being divided by a number of RE(s) occupied by the first signal in time-frequency domain.

In one embodiment, at least one of a number of bit(s) comprised in the first bit block or a number of bit(s) comprised in the second bit block is used to determine a first number; the third amount of calculation is equal to a sum of the first number plus a number of CRC bit(s) for the first bit block plus a number of CRC bit(s) for the second bit block being divided by a number of RE(s) occupied by the first signal in time-frequency domain.

In one subembodiment, the first number is greater than a second threshold.

In one subembodiment, a sum of the number of bit(s) comprised in the first bit block and the number of bit(s) comprised in the second bit block is greater than a second threshold.

In one embodiment, the first number is equal to: a sum of the number of bit(s) comprised in the first bit block and the number of bit(s) comprised in the second bit block.

In one embodiment, the first number is equal to: the number of bit(s) comprised in the first bit block.

In one embodiment, the first number is equal to: the number of bit(s) comprised in the second bit block.

In one embodiment, the first number is equal to: a result yielded by the number of bit(s) comprised in the first bit block divided by a first ratio being rounded to a nearest integer further plus the number of bit(s) comprised in the second bit block.

In one embodiment, the first number is equal to: a result yielded by the number of bit(s) comprised in the second bit block divided by a first ratio being rounded to a nearest integer further plus the number of bit(s) comprised in the first bit block.

In one embodiment, the first number is equal to: a result yielded by the number of bit(s) comprised in the first bit block multiplied by a first ratio being rounded to a nearest integer further plus the number of bit(s) comprised in the second bit block.

In one embodiment, the first number is equal to: a result yielded by the number of bit(s) comprised in the second bit block multiplied by a first ratio being rounded to a nearest integer further plus the number of bit(s) comprised in the first bit block.

In one embodiment, the first ratio is a ratio of two coding rates, the two coding rates being configured by an RRC signaling or a MAC CE signaling.

In one embodiment, the second threshold is a positive integer that is pre-defined.

In one embodiment, the second threshold is a positive integer that is configurable.

In one embodiment, the second threshold is no greater than 1706.

In one embodiment, the second threshold is equal to 11.

In one embodiment, the second threshold is equal to 22.

In one embodiment, the second threshold is equal to 4.

In one embodiment, the second threshold is the first threshold.

In one embodiment, the second threshold isn't the first threshold.

In one embodiment, the number of bits comprised in the first bit block is greater than 2, and the number of bits comprised in the second bit block is greater than 2.

In one embodiment, the number of bits comprised in the first bit block is greater than 2, and the number of bits comprised in the second bit block is greater than 11.

In one embodiment, the number of bits comprised in the first bit block is greater than 2 and no greater than 11, and the number of bits comprised in the second bit block is greater than 11.

In one embodiment, the number of bits comprised in the first bit block is greater than 11, and a sum of the number of bits comprised in the first bit block and the number of bits comprised in the second bit block is greater than 11.

In one embodiment, the number of bits comprised in the first bit block is greater than 11, and the number of bits comprised in the second bit block is greater than 11.

In one embodiment, the number of bits comprised in the first bit block is greater than 11, and the number of bits comprised in the second bit block is greater than 2 and no greater than 11.

In one embodiment, the number of bits comprised in the first bit block is greater than 2, and a sum of the number of bits comprised in the first bit block and the number of bits comprised in the second bit block is greater than 11.

In one embodiment, the number of bits comprised in the first bit block is greater than 2 and no greater than 11, and a sum of the number of bits comprised in the first bit block and the number of bits comprised in the second bit block is greater than 11.

In one embodiment, the number of bits comprised in the first bit block is greater than 2, and at least one of the number of bits comprised in the first bit block or the number of bits comprised in the second bit block is used to determine a first number, the first number being greater than 11.

In one embodiment, the number of bits comprised in the first bit block is greater than 2 and no greater than 11, and at least one of the number of bits comprised in the first bit block or the number of bits comprised in the second bit block is used to determine a first number, the first number being greater than 11.

In one embodiment, the number of bits comprised in the first bit block is greater than 2, and the number of bits comprised in the second bit block is greater than a second threshold.

In one embodiment, the number of bits comprised in the first bit block is greater than 2 and no greater than a second threshold, and the number of bits comprised in the second bit block is greater than the second threshold.

In one embodiment, the number of bits comprised in the first bit block is greater than a second threshold, and a sum of the number of bits comprised in the first bit block and the number of bits comprised in the second bit block is greater than the second threshold.

In one embodiment, the number of bits comprised in the first bit block is greater than a second threshold, and the number of bits comprised in the second bit block is greater than the second threshold.

In one embodiment, the number of bits comprised in the first bit block is greater than a second threshold, and the number of bits comprised in the second bit block is greater than 2 and no greater than the second threshold.

In one embodiment, the number of bits comprised in the first bit block is greater than 2, and a sum of the number of bits comprised in the first bit block and the number of bits comprised in the second bit block is greater than a second threshold.

In one embodiment, the number of bits comprised in the first bit block is greater than 2 and no greater than a second threshold, and a sum of the number of bits comprised in the first bit block and the number of bits comprised in the second bit block is greater than the second threshold.

In one embodiment, the number of bits comprised in the first bit block is greater than 2, and at least one of the number of bits comprised in the first bit block or the number of bits comprised in the second bit block is used to determine a first number, the first number being greater than a second threshold.

In one embodiment, the number of bits comprised in the first bit block is greater than 2 and no greater than a second threshold, and at least one of the number of bits comprised in the first bit block or the number of bits comprised in the second bit block is used to determine a first number, the first number being greater than the second threshold.

In one embodiment, the number of the CRC bit(s) for the first bit block is equal to 0 or is a positive integer.

In one embodiment, the number of the CRC bit(s) for the second bit block is equal to 0 or is a positive integer.

In one embodiment, the third amount of calculation being used to determine the second amount of adjustment means that the second amount of adjustment is equal to 10×log 10 (K1×the third amount of calculation), where K1 is pre-defined or configurable.

In one embodiment, the third amount of calculation being used to determine the second amount of adjustment means that the second amount of adjustment = 10×log10 (K1×the third amount of calculation), where K1 =6.

In one embodiment, the third amount of calculation being used to determine the second amount of adjustment means that the second amount of adjustment is equal to 10×log10 (2^b-1), where the b is equal to K2 multiplied by the third amount of calculation, where the K2 is pre-defined or configurable.

In one embodiment, the third amount of calculation being used to determine the second amount of adjustment means that the second amount of adjustment = 10×log10(2^(K2× the third amount of calculation ) - 1), where K2 =2.4.

In one embodiment, the third amount of calculation being used to determine the second amount of adjustment means that the second amount of adjustment is equal to 10×log10 (K1×the third amount of calculation), where K1 is pre-defined or configurable; or, the second amount of adjustment is equal to 10×log10 (2^b-1), where the b is equal to K2 multiplied by the third amount of calculation, where the K2 is pre-defined or configurable.

In one embodiment, the K1 in the present application is equal to 6.

In one embodiment, the K2 in the present application is equal to 2.4.

### Embodiment 10

Embodiment 10 illustrates a schematic diagram explaining that a target transmission power is used to determine a first transmission power and a target amount of adjustment is used to determine a target transmission power according to one embodiment of the present application; as shown in FIG. 10.

In Embodiment 10, a first transmission power is equal to a smaller value between an upper-limit transmission power and a target transmission power, where the target transmission power equals a sum of a target amount of adjustment and other power control components, where one of the other power control components is configurable or related to the first time-frequency resource pool or obtained based on indication.

In one embodiment, the upper-limit transmission power is pre-defined.

In one embodiment, the upper-limit transmission power is configurable.

In one embodiment, the upper-limit transmission power is configured by an RRC signaling.

In one embodiment, the upper-limit transmission power is a configured maximum output power.

In one embodiment, the upper-limit transmission power is provided for a PUCCH transmission occasion.

In one embodiment, the other power control components include at least one power control component.

In one embodiment, the other power control components include multiple power control components.

In one embodiment, one of the other power control components is defined in 3GPP TS38.213, Section 7.2.1.

In one embodiment, the other power control components include at least one of a first power control component, a second power control component, a third power control component, a fourth power control component or a fifth power control component.

In one embodiment, the target transmission power is equal to a sum of the target amount of adjustment, a first power control component, a second power control component, a third power control component, a fourth power control component and a fifth power control component.

In one embodiment, the first power control component is configured in a p0-nominal field.

In one embodiment, the first power control component is configured in a P0-PUCCH field.

In one embodiment, a power control component in the first power control component is a p0-PUCCH-Value.

In one embodiment, the first power control component is equal to 0.

In one embodiment, symbols in which the first power control component is expressed include PO_PUCCH,b,f,c.

In one embodiment, the second power control component is equal to 10×log10(2^µ × MRB), where the MRB is equal to a number of Resource Block(s) (RB(s)) comprised in all or part of the first time-frequency resource pool in frequency domain, and the µ is a Subcarrier spacing (SCS) configuration.

In one embodiment, the third power control component is a downlink pathloss estimate.

In one embodiment, the third power control component is measured in dB.

In one embodiment, the third power control component is derived by calculation based on a measurement for a reference signal.

In one embodiment, symbols in which the third power control component is expressed include PLb,f,c.

In one embodiment, the fourth power control component is one of a value of deltaF-PUCCH-f2, a value of deltaF-PUCCH-f3, a value of deltaF- PUCCH-f4 or 0.

In one embodiment, the fourth power control component is related to a PUCCH format.

In one embodiment, the first time-frequency resource pool in the present application is time-frequency resources reserved for a first PUCCH, the first PUCCH using one of a PUCCH format 2, or a PUCCH format 3 or a PUCCH format 4; when the first PUCCH uses a PUCCH format 2, the fourth power control component is a value of deltaF-PUCCH-f2 or 0; when the first PUCCH uses a PUCCH format 3, the fourth power control component is a value of deltaF-PUCCH-f3 or 0; when the first PUCCH uses a PUCCH format 2, the fourth power control component is a value of deltaF-PUCCH-f4 or 0.

In one embodiment, symbols in which the fourth power control component is expressed include ΔF_PUCCH.

In one embodiment, the fifth power control component is a PUCCH power control adjustment state.

In one embodiment, the fifth power control component is obtained based on an indication by a field in a DCI.

In one embodiment, the fifth power control component is determined based on a transmission power control (TPC) command.

In one embodiment, a value of the fifth power control component is for a PUCCH transmission occasion corresponding to a first time-frequency resource pool in the present application.

In one embodiment, symbols in which the fifth power control component is expressed include gb,f,c.

In one embodiment, symbols in which the target amount of adjustment is expressed include Δ.

In one embodiment, symbols in which the target amount of adjustment is expressed include ΔTF,b,f,c.

### Embodiment 11

Embodiment 11 illustrates a schematic diagram illustrating a first time-frequency resource pool according to one embodiment of the present application, as shown in FIG. 11.

In Embodiment 11, a first time-frequency resource pool is time-frequency resources reserved for a first PUCCH, the first PUCCH using one of a PUCCH format 2, or a PUCCH format 3 or a PUCCH format 4.

In one embodiment, the first PUCCH also occupies a code-domain resource.

In one embodiment, the first signal in the present application is transmitted in the first PUCCH.

### Embodiment 12

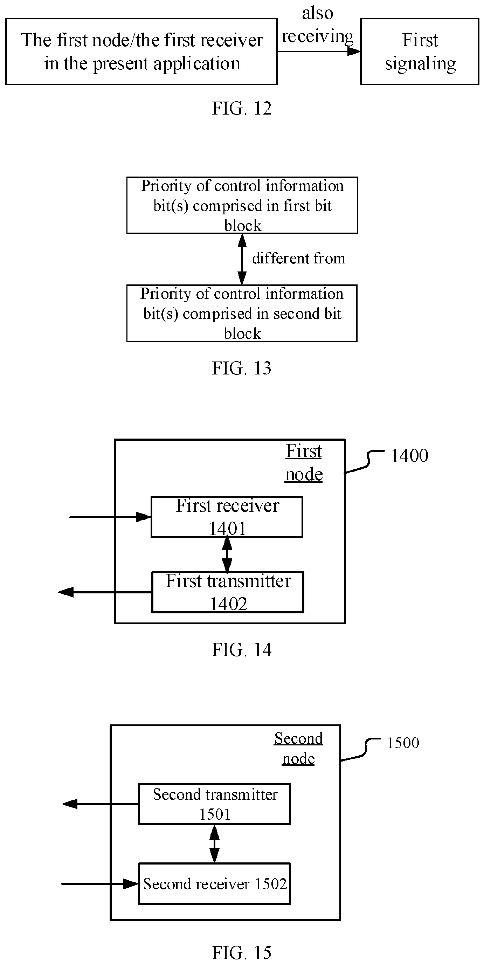

Embodiment 12 illustrates a schematic diagram of the relation between a first node/first receiver and a first signaling according to one embodiment of the present application, as shown in FIG. 12.

In Embodiment 12, the first node/the first receiver in the present application also receives a first signaling; herein, the first time-frequency resource pool in the present application is resources comprised by a first PUCCH resource in time-frequency domain, the first PUCCH resource belonging to a first PUCCH resource set, the first PUCCH resource set comprising at least one PUCCH resource, and the first signaling being used to determine the first PUCCH resource from the first PUCCH resource set; the first PUCCH resource set is one of X2 candidate PUCCH resource sets, where X2 is a positive integer greater than 1, the first information block in the present application being used to determine the X2 candidate PUCCH resource sets; at least one of a number of bit(s) comprised in the first bit block in the present application or a number of bit(s) comprised in the second bit block in the present application is used to determine the first PUCCH resource set from the X2 candidate PUCCH resource sets.

In one embodiment, the first signaling is dynamically configured.

In one embodiment, the first signaling comprises a layer 1 (L1) signaling.

In one embodiment, the first signaling comprises a layer 1 (L1) control signaling.

In one embodiment, the first signaling comprises a Physical Layer signaling.

In one embodiment, the first signaling comprises one or more fields in a physical layer signaling.

In one embodiment, the first signaling comprises a Higher Layer signaling.

In one embodiment, the first signaling comprises one or more fields in a Higher Layer signaling.

In one embodiment, the first signaling comprises a Radio Resource Control (RRC) signaling.

In one embodiment, the first signaling comprises a Medium Access Control layer Control Element (MAC CE) signaling.

In one embodiment, the first signaling comprises one or more fields in an RRC signaling.

In one embodiment, the first signaling comprises one or more fields in a MAC CE signaling.

In one embodiment, the first signaling comprises Downlink Control Information (DCI).

In one embodiment, the first signaling comprises one or more fields in a DCI.

In one embodiment, the first signaling is a DCI.

In one embodiment, the first signaling comprises Sidelink Control Information (SCI).

In one embodiment, the first signaling comprises one or more fields in an SCI.

In one embodiment, the first signaling comprises one or more fields in an Information Element (IE).

In one embodiment, the first signaling is a DownLink Grant Signaling.

In one embodiment, the first signaling is an UpLink Grant Signaling.

In one embodiment, the first signaling is transmitted in a downlink physical layer control channel (i.e., a downlink channel only capable of bearing physical layer signaling).

In one embodiment, the downlink physical layer control channel in the present application is a Physical Downlink Control CHannel (PDCCH).

In one embodiment, the downlink physical layer control channel in the present application is a short PDCCH (sPDCCH).

In one embodiment, the downlink physical layer control channel in the present application is a Narrow Band PDCCH (NB-PDCCH).

In one embodiment, the first signaling is DCI format 1_0, for the specific definition of the DCI format 1_0, refer to 3GPP TS38.212, Chapter 7.3.1.2.

In one embodiment, the first signaling is DCI format 1_1, for the specific definition of the DCI format 1_1, refer to 3GPP TS38.212, Chapter 7.3.1.2.

In one embodiment, the first signaling is DCI format 1_2, for the specific definition of the DCI format 1_2, refer to 3GPP TS38.212, Chapter 7.3.1.2.

In one embodiment, the first signaling is DCI format 0_0, for the specific definition of the DCI format 0_0, refer to 3GPP TS38.212, Chapter 7.3.1.1.

In one embodiment, the first signaling is DCI format 0_1, for the specific definition of the DCI format 0_1, refer to 3GPP TS38.212, Chapter 7.3.1.1.

In one embodiment, the first signaling is DCI format 0_2, for the specific definition of the DCI format 0_2, refer to 3GPP TS38.212, Chapter 7.3.1.1.

In one embodiment, the first signaling indicates a transmission of a PDSCH, the first bit block comprising HARQ-ACK information bit(s) corresponding to the PDSCH.

In one embodiment, the first signaling indicates a transmission of a PDSCH, the second bit block comprising HARQ-ACK information bit(s) corresponding to the PDSCH.

In one embodiment, the first information block in the present application indicates the X2 candidate PUCCH resource sets.

In one embodiment, a field comprised in the first information block in the present application configures the X2 candidate PUCCH resource sets.

In one embodiment, the statement that "at least one of a number of bit(s) comprised in the first bit block in the present application or a number of bit(s) comprised in the second bit block in the present application is used to determine the first PUCCH resource set from the X2 candidate PUCCH resource sets" means that a number of bit(s) comprised in the first bit block and a parameter value are used together to determine the first PUCCH resource set from the X2 candidate PUCCH resource sets, the parameter value being pre-defined or configurable.

In one subembodiment, X2 numerical ranges respectively correspond to the X2 candidate PUCCH resource sets, a sum of the number of bit(s) comprised in the first bit block and the parameter value belongs to a first numerical range among the X2 numerical ranges, and the first PUCCH resource set is a PUCCH resource corresponding to the first numerical range among the X2 candidate PUCCH resource sets.

In one embodiment, the statement that "at least one of a number of bit(s) comprised in the first bit block in the present application or a number of bit(s) comprised in the second bit block in the present application is used to determine the first PUCCH resource set from the X2 candidate PUCCH resource sets" means that a sum of a number of bit(s) comprised in the first bit block and a number of bit(s) comprised in the second bit block (or a bit block generated by the second bit block) is used to determine the first PUCCH resource set from the X2 candidate PUCCH resource sets.

In one subembodiment, X2 numerical ranges respectively correspond to the X2 candidate PUCCH resource sets, a sum of the number of bit(s) comprised in the first bit block and the number of bit(s) comprised in the second bit block (or a bit block generated by the second bit block) belongs to a first numerical range among the X2 numerical ranges, and the first PUCCH resource set is a PUCCH resource corresponding to the first numerical range among the X2 candidate PUCCH resource sets.

In one embodiment, the first signaling is used to indicate the first PUCCH resource in the first PUCCH resource set.

In one embodiment, the first signaling indicates an index of the first PUCCH resource in the first PUCCH resource set.

In one embodiment, the first information block in the present application is used to determine X3 candidate PUCCH resources, X3 being a positive integer greater than 1; at least one of a number of bit(s) comprised in the first bit block in the present application or a number of bit(s) comprised in the second bit block in the present application is used to indicate the first PUCCH resource from the X3 candidate PUCCH resources.

### Embodiment 13

Embodiment 13 illustrates a schematic diagram of the relation between a priority of control information bit(s) comprised in a first bit block and a priority of control information bit(s) comprised in a second bit block according to one embodiment of the present application; as shown in FIG. 13.

In Embodiment 13, a priority of control information bit(s) comprised in a first bit block and a priority of control information bit(s) comprised in a second bit block are different.

In one embodiment, a priority index for control information bit(s) comprised in the first bit block is equal to a first index, while a priority index for control information bit(s) comprised in the second bit block is equal to a first index, the first index being a non-negative integer and the second index being a non-negative integer; the first index and the second index are unequal.

In one embodiment, a sum of the number of control information bit(s) comprised in the first bit block and the number of control information bit(s) comprised in the second bit block is greater than 2.

In one embodiment, the first index is equal to 0, and the second index is equal to 1.

In one embodiment, the first index is equal to 1, and the second index is equal to 0.

In one embodiment, the first index is Priority Index 0, and the second index is Priority Index 1.

In one embodiment, the first index is Priority Index 1, and the second index is Priority Index 0.

In one embodiment, the first index indicates High Priority, while the second index indicates Low Priority.

In one embodiment, the second index indicates High Priority, while the first index indicates Low Priority.

In one embodiment, a priority indicated by the second index is higher than a priority indicated by the first index.

In one embodiment, a priority indicated by the second index is lower than a priority indicated by the first index.

In one embodiment, a priority index for control information bit(s) comprised in the first bit block and a priority index for control information bit(s) comprised in the second bit block are both physical-layer priority indexes.

In one embodiment, a priority index for control information bit(s) comprised in the first bit block and a priority index for control information bit(s) comprised in the second bit block are both higher-layer priority indexes.

In one embodiment, the control information bit(s) comprised in the first bit block and the control information bit(s) comprised in the second bit block are respectively for different service types.

In one embodiment, the control information bit(s) comprised in the first bit block and the control information bit(s) comprised in the second bit block are respectively control information bits for different transmission modes, for instance, broadcasting, multicasting, groupcasting or unicasting.

In one subembodiment, a control information bit for multicast mode and a control information bit for unicast mode have different priorities.

In one subembodiment, a control information bit for groupcast mode and a control information bit for unicast mode have different priorities.

In one subembodiment, a control information bit for broadcast mode and a control information bit for unicast mode have different priorities.

In one embodiment, the control information bit(s) comprised in the first bit block and the control information bit(s) comprised in the second bit block respectively correspond to different Priority indexes.

In one embodiment, the control information bit(s) comprised in the first bit block and the control information bit(s) comprised in the second bit block respectively correspond to Priority index 0 and Priority index 1.

In one embodiment, the control information bit(s) comprised in the first bit block and the control information bit(s) comprised in the second bit block respectively correspond to Priority index 1 and Priority index 0.

### Embodiment 14

Embodiment 14 illustrates a structure block diagram of a processing device in a first node, as shown in FIG. 14. In FIG. 14, a first node processing device 1400 comprises a first receiver 1401 and a first transmitter 1402.

In one embodiment, the first node 1400 is a UE.

In one embodiment, the first node 1400 is a relay node.

In one embodiment, the first node 1400 is vehicle-mounted communication equipment.

In one embodiment, the first node 1400 is a UE supporting V2X communications.

In one embodiment, the first node 1400 is a relay node supporting V2X communications.

In one embodiment, the first receiver 1401 comprises at least one of the antenna 452, the receiver 454, the multi-antenna receiving processor 458, the receiving processor 456, the controller/processor 459, the memory 460 or the data source 467 in FIG. 4 of the present application.

In one embodiment, the first receiver 1401 comprises at least the first five of the antenna 452, the receiver 454, the multi-antenna receiving processor 458, the receiving processor 456, the controller/processor 459, the memory 460 and the data source 467 in FIG. 4 of the present application.

In one embodiment, the first receiver 1401 comprises at least the first four of the antenna 452, the receiver 454, the multi-antenna receiving processor 458, the receiving processor 456, the controller/processor 459, the memory 460 and the data source 467 in FIG. 4 of the present application.

In one embodiment, the first receiver 1401 comprises at least the first three of the antenna 452, the receiver 454, the multi-antenna receiving processor 458, the receiving processor 456, the controller/processor 459, the memory 460 and the data source 467 in FIG. 4 of the present application.

In one embodiment, the first receiver 1401 comprises at least the first two of the antenna 452, the receiver 454, the multi-antenna receiving processor 458, the receiving processor 456, the controller/processor 459, the memory 460 and the data source 467 in FIG. 4 of the present application.

In one embodiment, the first transmitter 1402 comprises at least one of the antenna 452, the transmitter 454, the multi-antenna transmitting processor 457, the transmitting processor 468, the controller/processor 459, the memory 460 or the data source 467 in FIG. 4 of the present application.

In one embodiment, the first transmitter 1402 comprises at least the first five of the antenna 452, the transmitter 454, the multi-antenna transmitting processor 457, the transmitting processor 468, the controller/processor 459, the memory 460 and the data source 467 in FIG. 4 of the present application.

In one embodiment, the first transmitter 1402 comprises at least the first four of the antenna 452, the transmitter 454, the multi-antenna transmitting processor 457, the transmitting processor 468, the controller/processor 459, the memory 460 and the data source 467 in FIG. 4 of the present application.

In one embodiment, the first transmitter 1402 comprises at least the first three of the antenna 452, the transmitter 454, the multi-antenna transmitting processor 457, the transmitting processor 468, the controller/processor 459, the memory 460 and the data source 467 in FIG. 4 of the present application.

In one embodiment, the first transmitter 1402 comprises at least the first two of the antenna 452, the transmitter 454, the multi-antenna transmitting processor 457, the transmitting processor 468, the controller/processor 459, the memory 460 and the data source 467 in FIG. 4 of the present application.

In Embodiment 14, the first receiver receives a first information block, the first information block being used to determine a first time-frequency resource pool; and the first transmitter 1402 transmits a first signal with a first transmission power, the first signal carrying a first bit block and a second bit block, the first bit block comprising at least one control information bit, and the second bit block comprising at least one control information bit, where a priority of the control information bit(s) comprised in the first bit block and a priority of the control information bit(s) comprised in the second bit block are different; herein, time-frequency resources occupied by the first signal belong to the first time-frequency resource pool; resource element(s) (RE(s)) comprised in the first time-frequency resource pool being used for the first bit block and RE(s) comprised in the first time-frequency resource pool being used for the second bit block are orthogonal; a number of bit(s) comprised in the first bit block and a first resource size are used together to determine a first amount of adjustment, the first resource size being a number of the RE(s) comprised in the first time-frequency resource pool being used for the first bit block; the first amount of adjustment is used to determine a target amount of adjustment, the target amount of adjustment being used to determine the first transmission power.

In one embodiment, a first amount of calculation is equal to a sum of the number of the bit(s) comprised in the first bit block and a number of Cyclic Redundancy Check (CRC) bit(s) for the first bit block being divided by the first resource size; the first amount of calculation is used to determine the first amount of adjustment.

In one embodiment, when the number of the bit(s) comprised in the first bit block is no greater than a first threshold, a first information bit number and the first resource size are used together to determine the first amount of adjustment, the first information bit number being a number of Hybrid Automatic Repeat reQuest- ACKnowledgement (HARQ-ACK) information bit(s) used for obtaining a transmission power of a Physical Uplink Control CHannel (PUCCH); when the number of the bit(s) comprised in the first bit block is greater than a first threshold, a first amount of calculation is equal to a sum of the number of the bit(s) comprised in the first bit block and a number of CRC bit(s) for the first bit block being divided by the first resource size, the first amount of calculation being used to determine the first amount of adjustment; the first threshold is pre-defined or configurable.

In one embodiment, the first amount of adjustment is equal to 10×log10 (2^b-1), where the b is equal to K2 multiplied by the first amount of calculation, where the K2 is pre-defined or configurable.

In one embodiment, at least a latter of the first bit block and the second bit block is used to determine a second amount of adjustment, the target amount of adjustment being equal to a maximum one of the first amount of adjustment and the second amount of adjustment.

In one embodiment, the target amount of adjustment is the first amount of adjustment.

In one embodiment, the first transmission power is equal to a smaller value between an upper-limit transmission power and a target transmission power, the target amount of adjustment being used to determine the target transmission power, and the upper-limit transmission power being pre-defined or configurable.

In one embodiment, the first receiver 1401 also receives a first signaling; herein, the first time-frequency resource pool is resources comprised by a first PUCCH resource in time-frequency domain, the first PUCCH resource belonging to a first PUCCH resource set, the first PUCCH resource set comprising at least one PUCCH resource, and the first signaling being used to determine the first PUCCH resource from the first PUCCH resource set; the first PUCCH resource set is one of X2 candidate PUCCH resource sets, where X2 is a positive integer greater than 1, the first information block in the present application being used to determine the X2 candidate PUCCH resource sets; at least one of a number of bit(s) comprised in the first bit block in the present application or a number of bit(s) comprised in the second bit block in the present application is used to determine the first PUCCH resource set from the X2 candidate PUCCH resource sets.

In one embodiment, the number of bits comprised in the first bit block is greater than 2; when the number of the bit(s) comprised in the first bit block is no greater than a first threshold, a first information bit number and the first resource size are used together to determine the first amount of adjustment, the first information bit number being a number of HARQ-ACK information bit(s), with a priority equal to control information bit(s) comprised in the first bit block, and which is(are) used for obtaining a transmission power of a PUCCH; when the number of the bit(s) comprised in the first bit block is greater than a first threshold, a first amount of calculation is equal to a sum of the number of the bit(s) comprised in the first bit block and a number of CRC bit(s) for the first bit block being divided by the first resource size, the first amount of calculation being used to determine the first amount of adjustment; the first threshold is pre-defined or configurable; the target amount of adjustment is equal to the first amount of adjustment; a target transmission power is equal to a sum of the target amount of adjustment and other power control components, where other power control components are configurable or related to the first time-frequency resource pool or derived according to indication; the first transmission power is equal to a smaller value between an upper-limit transmission power and a target transmission power, the upper-limit transmission power being pre-defined or configurable.

In one subembodiment, the first threshold is equal to 11.

In one subembodiment, when the number of the bit(s) comprised in the first bit block is no greater than the first threshold: A second amount of calculation is equal to a sum of the three of the first information bit number, the number of SR information bit(s) comprised in the first bit block and the number of CSI information bit(s) comprised in the first bit block being divided by the first resource size, while the first amount of adjustment is equal to 10×log10 (K1×the second amount of calculation), where K1 is pre-defined or configurable.

In one subembodiment, when the number of the bit(s) comprised in the first bit block is greater than the first threshold, the first amount of adjustment is equal to 10×log10 (2^b-1), where the b is equal to K2 multiplied by the first amount of calculation, where the K2 is pre-defined or configurable.

In one embodiment, the number of bits comprised in the first bit block is greater than 2; when the number of the bit(s) comprised in the first bit block is no greater than a first threshold, a first information bit number and the first resource size are used together to determine the first amount of adjustment, the first information bit number being a number of HARQ-ACK information bit(s), with a priority equal to control information bit(s) comprised in the first bit block, and which is(are) used for obtaining a transmission power of a PUCCH; when the number of the bit(s) comprised in the first bit block is greater than a first threshold, a first amount of calculation is equal to a sum of the number of the bit(s) comprised in the first bit block and a number of CRC bit(s) for the first bit block being divided by the first resource size, the first amount of calculation being used to determine the first amount of adjustment; the first threshold is pre-defined or configurable; at least a latter of the first bit block and the second bit block is used to determine a first number, the first number being used to determine the third amount of calculation; the second amount of adjustment is equal to 10×log10 (2^b-1), where the b is equal to K2 multiplied by the third amount of calculation, where the K2 is pre-defined or configurable; the target amount of adjustment is equal to a maximum one of the first amount of adjustment and the second amount of adjustment; a target transmission power is equal to a sum of the target amount of adjustment and other power control components, where other power control components are configurable or related to the first time-frequency resource pool or derived according to indication; the first transmission power is equal to a minimum value of an upper-limit transmission power and a target transmission power, the upper-limit transmission power being pre-defined or configurable.

In one subembodiment, the first threshold is equal to 11.

In one subembodiment, the first number is greater than 11.

In one subembodiment, the first number is greater than a positive integer preset.

In one subembodiment, the number of bits comprised in the second bit block is greater than 11.

In one subembodiment, a sum of the number of bit(s) comprised in the first bit block and the number of bit(s) comprised in the second bit block is greater than 11.

In one subembodiment, the first number is equal to a sum of a number of bit(s) comprised in the first bit block and a number of bit(s) comprised in the second bit block, and the third amount of calculation is equal to a sum of the three of the first number, a number of CRC bit(s) for the second bit block and a number of CRC bit(s) for the first bit block being divided by a number of RE(s) occupied by the first signal in time-frequency domain.

In one subembodiment, the first number is equal to a number of bit(s) comprised in the second bit block, and the third amount of calculation is equal to a sum of the first number and a number of CRC bit(s) for the second bit block being divided by a number of RE(s) for the second bit block comprised in the first time-frequency resource pool.

In one subembodiment, the number of CSI information bit(s) comprised in the first bit block is equal to 0.

In one subembodiment, K1 is equal to 6.

In one subembodiment, K2 is equal to 2.4.

In one subembodiment, when the number of the bit(s) comprised in the first bit block is no greater than the first threshold: A second amount of calculation is equal to a sum of the three of the first information bit number, the number of SR information bit(s) comprised in the first bit block and the number of CSI information bit(s) comprised in the first bit block being divided by the first resource size, while the first amount of adjustment is equal to 10×log10 (K1×the second amount of calculation), where K1 is pre-defined or configurable.

In one subembodiment, when the number of the bit(s) comprised in the first bit block is greater than the first threshold, the first amount of adjustment is equal to 10×log10 (2^b-1), where the b is equal to K2 multiplied by the first amount of calculation, where the K2 is pre-defined or configurable.

### Embodiment 15

Embodiment 15 illustrates a structure block diagram a processing device in a second node according to one embodiment of the present application, as shown in FIG. 15. In FIG. 15, a second node processing device 1500 comprises a second transmitter 1501 and a second receiver 1502.

In one embodiment, the second node 1500 is a UE.

In one embodiment, the second node 1500 is a base station.

In one embodiment, the second node 1500 is a relay node.

In one embodiment, the second node 1500 is vehicle-mounted communication equipment.

In one embodiment, the second node 1500 is a UE supporting V2X communications.

In one embodiment, the second transmitter 1501 comprises at least one of the antenna 420, the transmitter 418, the multi-antenna transmitting processor 471, the transmitting processor 416, the controller/processor 475 or the memory 476 in FIG. 4 of the present application.

In one embodiment, the second transmitter 1501 comprises at least the first five of the antenna 420, the transmitter 418, the multi-antenna transmitting processor 471, the transmitting processor 416, the controller/processor 475 and the memory 476 in FIG. 4 of the present application.

In one embodiment, the second transmitter 1501 comprises at least the first four of the antenna 420, the transmitter 418, the multi-antenna transmitting processor 471, the transmitting processor 416, the controller/processor 475 and the memory 476 in FIG. 4 of the present application.

In one embodiment, the second transmitter 1501 comprises at least the first three of the antenna 420, the transmitter 418, the multi-antenna transmitting processor 471, the transmitting processor 416, the controller/processor 475 and the memory 476 in FIG. 4 of the present application.

In one embodiment, the second transmitter 1501 comprises at least the first two of the antenna 420, the transmitter 418, the multi-antenna transmitting processor 471, the transmitting processor 416, the controller/processor 475 and the memory 476 in FIG. 4 of the present application.

In one embodiment, the second receiver 1502 comprises at least one of the antenna 420, the receiver 418, the multi-antenna receiving processor 472, the receiving processor 470, the controller/processor 475 or the memory 476 in FIG. 4 of the present application.

In one embodiment, the second receiver 1502 comprises at least the first five of the antenna 420, the receiver 418, the multi-antenna receiving processor 472, the receiving processor 470, the controller/processor 475 and the memory 476 in FIG. 4 of the present application.

In one embodiment, the second receiver 1502 comprises at least the first four of the antenna 420, the receiver 418, the multi-antenna receiving processor 472, the receiving processor 470, the controller/processor 475 and the memory 476 in FIG. 4 of the present application.

In one embodiment, the second receiver 1502 comprises at least the first three of the antenna 420, the receiver 418, the multi-antenna receiving processor 472, the receiving processor 470, the controller/processor 475 and the memory 476 in FIG. 4 of the present application.

In one embodiment, the second receiver 1502 comprises at least the first two of the antenna 420, the receiver 418, the multi-antenna receiving processor 472, the receiving processor 470, the controller/processor 475 and the memory 476 in FIG. 4 of the present application.

In Embodiment 15, the second transmitter 1501 transmits a first information block, the first information block being used to determine a first time-frequency resource pool; the second receiver 1502 receives a first signal transmitted with a first transmission power, the first signal carrying a first bit block and a second bit block, the first bit block comprising at least one control information bit, and the second bit block comprising at least one control information bit, where a priority of the control information bit(s) comprised in the first bit block and a priority of the control information bit(s) comprised in the second bit block are different; herein, time-frequency resources occupied by the first signal belong to the first time-frequency resource pool; resource element(s) (RE(s)) comprised in the first time-frequency resource pool being used for the first bit block and RE(s) comprised in the first time-frequency resource pool being used for the second bit block are orthogonal; a number of bit(s) comprised in the first bit block and a first resource size are used together to determine a first amount of adjustment, the first resource size being a number of the RE(s) comprised in the first time-frequency resource pool being used for the first bit block; the first amount of adjustment is used to determine a target amount of adjustment, the target amount of adjustment being used to determine the first transmission power.

In one embodiment, a first amount of calculation is equal to a sum of the number of the bit(s) comprised in the first bit block and a number of Cyclic Redundancy Check (CRC) bit(s) for the first bit block being divided by the first resource size; the first amount of calculation is used to determine the first amount of adjustment.

In one embodiment, when the number of the bit(s) comprised in the first bit block is no greater than a first threshold, a first information bit number and the first resource size are used together to determine the first amount of adjustment, the first information bit number being a number of Hybrid Automatic Repeat reQuest- ACKnowledgement (HARQ-ACK) information bit(s) used for obtaining a transmission power of a Physical Uplink Control CHannel (PUCCH); when the number of the bit(s) comprised in the first bit block is greater than a first threshold, a first amount of calculation is equal to a sum of the number of the bit(s) comprised in the first bit block and a number of CRC bit(s) for the first bit block being divided by the first resource size, the first amount of calculation being used to determine the first amount of adjustment; the first threshold is pre-defined or configurable.

In one embodiment, the first amount of adjustment is equal to 10×log10 (2^b-1), where the b is equal to K2 multiplied by the first amount of calculation, where the K2 is pre-defined or configurable.

In one embodiment, at least a latter of the first bit block and the second bit block is used to determine a second amount of adjustment, the target amount of adjustment being equal to a maximum one of the first amount of adjustment and the second amount of adjustment.

In one embodiment, the target amount of adjustment is the first amount of adjustment.

In one embodiment, the first transmission power is equal to a smaller value between an upper-limit transmission power and a target transmission power, the target amount of adjustment being used to determine the target transmission power, and the upper-limit transmission power being pre-defined or configurable.

In one embodiment, the second transmitter 1501 also transmits a first signaling; herein, the first time-frequency resource pool is resources comprised by a first PUCCH resource in time-frequency domain, the first PUCCH resource belonging to a first PUCCH resource set, the first PUCCH resource set comprising at least one PUCCH resource, and the first signaling being used to determine the first PUCCH resource from the first PUCCH resource set; the first PUCCH resource set is one of X2 candidate PUCCH resource sets, where X2 is a positive integer greater than 1, the first information block in the present application being used to determine the X2 candidate PUCCH resource sets; at least one of a number of bit(s) comprised in the first bit block in the present application or a number of bit(s) comprised in the second bit block in the present application is used to determine the first PUCCH resource set from the X2 candidate PUCCH resource sets.

The ordinary skill in the art may understand that all or part of steps in the above method may be implemented by instructing related hardware through a program. The program may be stored in a computer readable storage medium, for example Read-Only-Memory (ROM), hard disk or compact disc, etc. Optionally, all or part of steps in the above embodiments also may be implemented by one or more integrated circuits. Correspondingly, each module unit in the above embodiment may be realized in the form of hardware, or in the form of software function modules. The present application is not limited to any combination of hardware and software in specific forms. The first node in the present application includes but is not limited to mobile phones, tablet computers, notebooks, network cards, low-consumption equipment, enhanced MTC (eMTC) terminals, NB-IOT terminals, vehicle-mounted communication equipment, aircrafts, airplanes, unmanned aerial vehicles, telecontrolled aircrafts, etc. The second node in the present application includes but is not limited to mobile phones, tablet computers, notebooks, network cards, low-consumption equipment, enhanced MTC (eMTC) terminals, NB-IOT terminals, vehicle-mounted communication equipment, aircrafts, airplanes, unmanned aerial vehicles, telecontrolled aircrafts, etc. The UE or terminal in the present application includes but is not limited to mobile phones, tablet computers, notebooks, network cards, low-consumption equipment, enhanced MTC (eMTC) terminals, NB-IOT terminals, vehicle-mounted communication equipment, aircrafts, airplanes, unmanned aerial vehicles, telecontrolled aircrafts, etc. The base station in the present application includes but is not limited to macro-cellular base stations, micro-cellular base stations, home base stations, relay base station, eNB, gNB, Transmitter Receiver Point (TRP), GNSS, relay satellite, satellite base station, airborne base station, test apparatus, test equipment or test instrument, and other radio communication equipment.

The above are merely the preferred embodiments of the present application and are not intended to limit the scope of protection of the present application. Any modification, equivalent substitute and improvement made within the spirit and principle of the present application are intended to be included within the scope of protection of the present application.

## Claims

1. A first node for wireless communications, comprising:
a first receiver, which receives a first information block, the first information block being used to determine a first time-frequency resource pool; and
a first transmitter, which transmits a first signal with a first transmission power, the first signal carrying a first bit block and a second bit block, the first bit block comprising at least one control information bit, and the second bit block comprising at least one control information bit, where a priority of the control information bit(s) comprised in the first bit block and a priority of the control information bit(s) comprised in the second bit block are different;
wherein time-frequency resources occupied by the first signal belong to the first time-frequency resource pool; resource element(s) (RE(s)) comprised in the first time-frequency resource pool being used for the first bit block and RE(s) comprised in the first time-frequency resource pool being used for the second bit block are orthogonal; a number of bit(s) comprised in the first bit block and a first resource size are used together to determine a first amount of adjustment, the first resource size being a number of the RE(s) comprised in the first time-frequency resource pool being used for the first bit block; the first amount of adjustment is used to determine a target amount of adjustment, the target amount of adjustment being used to determine the first transmission power.

2. The first node according to claim 1, wherein a first amount of calculation is equal to a sum of the number of the bit(s) comprised in the first bit block and a number of Cyclic Redundancy Check (CRC) bit(s) for the first bit block being divided by the first resource size; the first amount of calculation is used to determine the first amount of adjustment.

3. The first node according to claim 1, wherein when the number of the bit(s) comprised in the first bit block is no greater than a first threshold, a first information bit number and the first resource size are used together to determine the first amount of adjustment, the first information bit number being a number of Hybrid Automatic Repeat reQuest ACKnowledgement (HARQ-ACK) information bit(s) for obtaining a transmission power of a Physical Uplink Control CHannel (PUCCH); when the number of the bit(s) comprised in the first bit block is greater than a first threshold, a first amount of calculation is equal to a sum of the number of the bit(s) comprised in the first bit block and a number of CRC bit(s) for the first bit block being divided by the first resource size, the first amount of calculation being used to determine the first amount of adjustment; the first threshold is pre-defined or configurable.

4. The first node according to claim 1 or 2, wherein a first amount of calculation is equal to a sum of a number of bit(s) comprised in the first bit block and a number of CRC bit(s) for the first bit block being divided by the first resource size; the first amount of adjustment is equal to 10×log₁₀ (2*^{b}*-1), where the b is equal to K₂ multiplied by the first amount of calculation, where the K₂ is equal to 2.4.

5. The first node according to claim 4, wherein a number of bits comprised in the first bit block is greater than 11; the target amount of adjustment is the first amount of adjustment; the first transmission power is equal to a smaller value between an upper-limit transmission power and a target transmission power, the target amount of adjustment being used to determine the target transmission power, and the upper-limit transmission power being pre-defined or configurable.

6. The first node according to claim 1, wherein at least a latter of the first bit block and the second bit block is used to determine a second amount of adjustment, the target amount of adjustment being equal to a maximum one of the first amount of adjustment and the second amount of adjustment;
or, wherein the target amount of adjustment is the first amount of adjustment.

7. The first node according to claim 1, wherein the first transmission power is equal to a smaller value between an upper-limit transmission power and a target transmission power, the target amount of adjustment being used to determine the target transmission power, and the upper-limit transmission power being pre-defined or configurable.

8. A second node for wireless communications, comprising:
a second transmitter, which transmits a first information block, the first information block being used to determine a first time-frequency resource pool; and
a second receiver, which receives a first signal transmitted with a first transmission power, the first signal carrying a first bit block and a second bit block, the first bit block comprising at least one control information bit, and the second bit block comprising at least one control information bit, where a priority of the control information bit(s) comprised in the first bit block and a priority of the control information bit(s) comprised in the second bit block are different;
wherein time-frequency resources occupied by the first signal belong to the first time-frequency resource pool; RE(s) comprised in the first time-frequency resource pool being used for the first bit block and RE(s) comprised in the first time-frequency resource pool being used for the second bit block are orthogonal; a number of bit(s) comprised in the first bit block and a first resource size are used together to determine a first amount of adjustment, the first resource size being a number of the RE(s) comprised in the first time-frequency resource pool being used for the first bit block; the first amount of adjustment is used to determine a target amount of adjustment, the target amount of adjustment being used to determine the first transmission power.

9. The second node according to claim 8, wherein when the number of the bit(s) comprised in the first bit block is no greater than a first threshold, a first information bit number and the first resource size are used together to determine the first amount of adjustment, the first information bit number being a number of HARQ-ACK information bit(s) used for obtaining a transmission power of a PUCCH; when the number of the bit(s) comprised in the first bit block is greater than a first threshold, a first amount of calculation is equal to a sum of the number of the bit(s) comprised in the first bit block and a number of CRC bit(s) for the first bit block being divided by the first resource size, the first amount of calculation being used to determine the first amount of adjustment; the first threshold is pre-defined or configurable.

10. The second node according to claim 8, wherein a first amount of calculation is equal to a sum of a number of bit(s) comprised in the first bit block and a number of CRC bit(s) for the first bit block being divided by the first resource size; the first amount of adjustment is equal to 10×log₁₀ (2*^{b}*-1), where the b is equal to K₂ multiplied by the first amount of calculation, where the K₂ is equal to 2.4.

11. The second node according to claim 10, wherein a number of bits comprised in the first bit block is greater than 11; the target amount of adjustment is the first amount of adjustment; the first transmission power is equal to a smaller value between an upper-limit transmission power and a target transmission power, the target amount of adjustment being used to determine the target transmission power, and the upper-limit transmission power being pre-defined or configurable.

12. The second node according to claim 8, wherein at least a latter of the first bit block and the second bit block is used to determine a second amount of adjustment, the target amount of adjustment being equal to a maximum one of the first amount of adjustment and the second amount of adjustment;
or, wherein the target amount of adjustment is the first amount of adjustment.

13. The second node according to claim 8, wherein the first transmission power is equal to a smaller value between an upper-limit transmission power and a target transmission power, the target amount of adjustment being used to determine the target transmission power, and the upper-limit transmission power being pre-defined or configurable.

14. A method in a first node for wireless communications, comprising:
receiving a first information block, the first information block being used to determine a first time-frequency resource pool; and
transmitting a first signal with a first transmission power, the first signal carrying a first bit block and a second bit block, the first bit block comprising at least one control information bit, and the second bit block comprising at least one control information bit, where a priority of the control information bit(s) comprised in the first bit block and a priority of the control information bit(s) comprised in the second bit block are different;
wherein time-frequency resources occupied by the first signal belong to the first time-frequency resource pool;
resource element(s) (RE(s)) comprised in the first time-frequency resource pool being used for the first bit block and RE(s) comprised in the first time-frequency resource pool being used for the second bit block are orthogonal; a number of bit(s) comprised in the first bit block and a first resource size are used together to determine a first amount of adjustment, the first resource size being a number of the RE(s) comprised in the first time-frequency resource pool being used for the first bit block; the first amount of adjustment is used to determine a target amount of adjustment, the target amount of adjustment being used to determine the first transmission power.

15. The method in the first node according to claim 14, wherein a first amount of calculation is equal to a sum of the number of the bit(s) comprised in the first bit block and a number of CRC bit(s) for the first bit block being divided by the first resource size; the first amount of calculation is used to determine the first amount of adjustment.

16. The method in the first node according to claim 14, wherein when the number of the bit(s) comprised in the first bit block is no greater than a first threshold, a first information bit number and the first resource size are used together to determine the first amount of adjustment, the first information bit number being a number of HARQ-ACK information bit(s) used for obtaining a transmission power of a PUCCH; when the number of the bit(s) comprised in the first bit block is greater than a first threshold, a first amount of calculation is equal to a sum of the number of the bit(s) comprised in the first bit block and a number of CRC bit(s) for the first bit block being divided by the first resource size, the first amount of calculation being used to determine the first amount of adjustment; the first threshold is pre-defined or configurable.

17. The method in the first node according to claim 14, wherein a first amount of calculation is equal to a sum of a number of bit(s) comprised in the first bit block and a number of CRC bit(s) for the first bit block being divided by the first resource size; the first amount of adjustment is equal to 10×log₁₀ (2*^{b}*-1), where the b is equal to K₂ multiplied by the first amount of calculation, where the K₂ is equal to 2.4.

18. The method in the first node according to claim 17, wherein a number of bits comprised in the first bit block is greater than 11; the target amount of adjustment is the first amount of adjustment; the first transmission power is equal to a smaller value between an upper-limit transmission power and a target transmission power, the target amount of adjustment being used to determine the target transmission power, and the upper-limit transmission power being pre-defined or configurable.

19. The method in the first node according to claim 14, wherein at least a latter of the first bit block and the second bit block is used to determine a second amount of adjustment, the target amount of adjustment being equal to a maximum one of the first amount of adjustment and the second amount of adjustment;
or, wherein the target amount of adjustment is the first amount of adjustment.

20. The method in the first node according to claim 14, wherein the first transmission power is equal to a smaller value between an upper-limit transmission power and a target transmission power, the target amount of adjustment being used to determine the target transmission power, and the upper-limit transmission power being pre-defined or configurable.
